(19) Europäisches Patentamt
European Patent Office
Office européen des brevets

(11) **EP 4 220 495 A1**

(12) **EUROPEAN PATENT APPLICATION**
published in accordance with Art. 153(4) EPC

(43) Date of publication:
**02.08.2023 Bulletin 2023/31**

(21) Application number: **21888504.4**

(22) Date of filing: **30.10.2021**

(51) International Patent Classification (IPC):
***G06N 5/04*** (2023.01)

(52) Cooperative Patent Classification (CPC):
**G06F 16/36; G06N 3/04; G06N 3/08; G06N 5/04;
G06N 20/10**

(86) International application number:
**PCT/CN2021/127748**

(87) International publication number:
**WO 2022/095807 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 03.11.2020 CN 202011210952
07.12.2020 CN 202011417335

(71) Applicant: **Huawei Cloud Computing
Technologies Co., Ltd.
Guizhou 550025 (CN)**

(72) Inventors:
• ZHENG, Zimu
  **Shenzhen, Guangdong 518129 (CN)**
• PU, Jie
  **Shenzhen, Guangdong 518129 (CN)**
• WANG, Feng
  **Shenzhen, Guangdong 518129 (CN)**
• LI, Jiahao
  **Shenzhen, Guangdong 518129 (CN)**

(74) Representative: **Körber, Martin Hans
Mitscherlich PartmbB
Patent- und Rechtsanwälte
Sonnenstraße 33
80331 München (DE)**

(54) **TASK LEARNING SYSTEM AND METHOD, AND RELATED DEVICE**

(57) A task learning system and method, and a related device are provided. The system includes a knowledge base module and a task processing apparatus. The knowledge base module is configured to store task attributes and task models corresponding to the task attributes. The task processing apparatus is configured to: obtain an input sample; when an inference task corresponding to the input sample is an unknown task, generate an inference model for the unknown task based on the task attributes and the task models that are stored in the knowledge base module; and perform inference on the input sample by using the inference model, to obtain a target inference result. Therefore, for the unknown task, inference accuracy of the input sample can be effectively improved, and a user does not need to customize an inference model, so that customization costs of the user are reduced.

FIG. 2

EP 4 220 495 A1

## Description

This application claims priority to Chinese Patent Application No. 202011210952.8, filed with the China National Intellectual Property Administration on November 3, 2020 and entitled "TASK LEARNING SYSTEM AND METHOD", and Chinese Patent Application No. 202011417335.5, filed with the China National Intellectual Property Administration on December 7, 2020 and entitled "TASK LEARNING SYSTEM AND METHOD, AND RELATED DEVICE". The foregoing two applications are incorporated herein by reference in their entireties.

## TECHNICAL FIELD

Embodiments of this application relate to the field of machine learning technologies, and in particular, to a task learning system and method, and a related device.

## BACKGROUND

Machine learning (machine learning) is a process of automatically analyzing and obtaining a rule from data, and predicting unknown data by using the rule, and is widely used in many fields, such as data mining, computer vision, natural language processing, a search engine, speech and handwriting recognition, securities market analysis, and medical diagnosis. A machine learning process for a specific sample may be referred to as a task (task).

In a conventional machine learning process, a known machine learning model (that is, a pre-trained model) is usually used to perform inference on an input sample (sample) provided by a user, and output an inference result (inference accuracy of the inference result may be ensured through model pre-training). However, during actual application, the user provides diversified input samples. Consequently, it may be difficult for the known machine learning model to be applied to the diversified input samples. As a result, for some input samples provided by the user, results obtained through inference by using the known machine learning model have low accuracy, and it is difficult to meet an actual application requirement of the user. For example, in a facial recognition scenario, accuracy of a result of facial recognition on a daytime surveillance video by using a known facial recognition model is high. However, when the user enters a night surveillance video into the facial recognition model, accuracy of a facial recognition result that is output by the facial recognition model may be low. Therefore, currently, a task learning system is urgently required, so that accurate inference results can be provided when a user provides diversified input samples.

## SUMMARY

Embodiments of this application provide a task learning system and method, a device, a storage medium, and a computer program product, so that accurate inference results can be obtained for diversified input samples provided by a user.

According to a first aspect, an embodiment of this application provides a task learning system. The system includes a knowledge base module and a task processing apparatus. The knowledge base module may be constructed by using a knowledge base, and is configured to store task attributes and task models corresponding to the task attributes. The task attributes and the task models belong to known knowledge, and may be used to perform accurate inference on an input sample of a known task. However, it is difficult to perform accurate inference on an input sample of an unknown task by using a single task model. The task processing apparatus may be configured to: obtain an input sample; when an inference task corresponding to the input sample is an unknown task, generate an inference model for the unknown task based on a task attribute and a corresponding task model that are stored in the knowledge base module; and perform accurate inference on the input sample by using the generated inference model, to obtain a target inference result.

In this way, when an inference task corresponding to an input sample provided by a user is an unknown task, a new inference model may be automatically generated for the input sample, and inference on the input sample is completed by using the newly generated inference model instead of an existing single task model. Therefore, inference accuracy of the input sample can be effectively improved, and the user does not need to customize an inference model, so that customization costs of the user are reduced.

In a possible implementation, the task processing apparatus may be further configured to determine a target task attribute of the input sample based on the input sample provided by the user and the task attributes stored in the knowledge base module. Then, the task processing apparatus may determine, based on the target task attribute of the input sample, the task attributes stored in the knowledge base module, and the task models stored in the knowledge base module, that the inference task corresponding to the input sample is an unknown task. In this way, after the user provides the input sample, the task processing apparatus may determine whether the inference task corresponding to the input sample is a known task or an unknown task. Therefore, when determining that the inference task is a known task, the task processing apparatus may perform inference on the input sample by using a known task model; and when determining that the inference task is an unknown task, the task processing apparatus performs inference on the input sample by using the newly generated inference model.

In a possible implementation, the task processing apparatus is specifically configured to determine, based on a difference between the target task attribute of the input sample and the task attribute stored in the knowledge base module, that the inference task corresponding to the input sample is an unknown task. For example, when there is a large difference between the target task attribute and each task attribute stored in the knowledge base module, the task processing apparatus may determine that the inference task corresponding to the input sample is an unknown task. However, when the task attributes stored in the knowledge base module include one or more task attributes whose differences from the target task attribute are small, the task processing apparatus may determine that the inference task corresponding to the input sample is a known task, and may perform inference on the input sample by using a known task model associated with a task attribute that has a small difference from the target task attribute.

In a possible implementation, the difference between the target task attribute and the task attribute stored in the knowledge base module may be measured by using a minimum editing distance between an attribute value of the target task attribute and an attribute value of the task attribute stored in the knowledge base module. Specifically, a smaller minimum editing distance indicates a smaller difference between the two task attributes. On the contrary, a larger minimum editing distance indicates a larger difference between the two task attributes.

In a possible implementation, the task processing apparatus may specifically determine, based on any one or more of confidence of performing inference on the input sample by using the task model stored in the knowledge base module, a model migration rate, and task model quality, whether the inference task corresponding to the input sample is an unknown task. Certainly, during actual application, another manner may alternatively be used for determining.

In a possible implementation, when generating the inference model, the task processing apparatus may specifically generate the inference model for the unknown task based on the target task attribute of the input sample, and the task attributes and the task models that are stored in the knowledge base module. For example, the task processing apparatus may determine, based on the target task attribute, a task attribute that is stored in the knowledge base module and that is highly correlated with the target task attribute, and further determine, based on the task attribute, a plurality of corresponding task models or training samples respectively corresponding to the plurality of task models. In this way, a new inference model may be generated by using the plurality of task models or the training samples corresponding to the plurality of task models.

In a possible implementation, the knowledge base module is further configured to store a task relationship, where the task relationship includes a subordinate relationship and/or a migration relationship. When generating the inference model, the task processing apparatus may specifically generate the inference model for the unknown task based on the target task attribute of the input sample, the task attributes and the task models that are stored in the knowledge base module, and the task relationship. In this way, the task processing apparatus may perform filtering on some knowledge of the knowledge base module by using the task relationship, so that efficiency of generating the inference model can be improved.

In a possible implementation, when generating the inference model, the task processing apparatus may specifically determine, based on the target task attribute of the input sample, a plurality of candidate task models in the task models stored in the knowledge base module; and use the plurality of candidate task models as the inference model. In this way, the inference model may be generated by combining a plurality of existing known task models, so that efficiency of generating the inference model is improved.

In a possible implementation, the knowledge base module is further configured to store training samples corresponding to the task attributes. In this way, when generating the inference model, the task processing apparatus may specifically determine, based on the target task attribute of the input sample, a plurality of candidate task models in the task models stored in the knowledge base module, and further determine training samples respectively corresponding to the plurality of candidate task models. Then, the task processing apparatus may retrain one or more candidate task models based on the training samples respectively corresponding to the plurality of candidate task models, and use, as the inference model, one or more candidate task models obtained through retraining. In this way, the task processing apparatus may generate the inference model by performing fine tuning on an existing task model, so that inference accuracy of the input sample is high, and efficiency of generating the inference model is also high.

In a possible implementation, the knowledge base module is further configured to store training samples corresponding to the task attributes. In this way, when generating the inference model, the task processing apparatus may specifically determine, based on the target task attribute of the input sample, a plurality of candidate task models in the task models stored in the knowledge base module, and further determine training samples respectively corresponding to the plurality of candidate task models. Then, the task processing apparatus may perform training based on the training samples respectively corresponding to the plurality of candidate task models, to obtain a new task model, and use the new task model as the inference model. In this way, the task processing apparatus may obtain a new task model by using the training samples stored in the knowledge base module, so that inference accuracy of the input sample can be high.

In a possible implementation, the task processing apparatus may include a model determining module and an inference module. The model determining module is configured to: when the inference task corresponding to the input sample is an unknown task, generate the inference model for the unknown task based on the task attributes and the task models that are stored in the knowledge base module. The inference module performs inference on the input sample by using the inference model generated by the model determining module, to obtain the target inference result. When the task processing apparatus is deployed, the model determining module in the task processing apparatus may be deployed in a cloud or an edge side network, and the inference module may be deployed in the edge side network. Certainly, during actual application, the model determining module and the inference model may be randomly deployed. For example, both the model determining module and the inference model are deployed in the cloud, or the model determining module is deployed in a distributed manner. This is not limited in this application. When the model determining module is deployed in the cloud, cloud computing resources can be fully used. Particularly, when the model determining module uses a combination of known models or retrains a model for an unknown task, a large quantity of storage resources and computing resources that are required by the model determining module may be borne by the cloud, so that efficiency of generating the inference model by the model determining module is improved. However, when the model determining module is deployed in the edge side network, the model determining module may determine, by using computing and storage resources of the edge side network, the inference model for performing inference on the input sample. In this way, related data involved in a calculation process of the model determining module may not be uploaded to the cloud, so that user data privacy can be protected.

In a possible implementation, the task processing apparatus further includes an attribute definition module and a task determining module. The attribute definition module is configured to determine the target task attribute of the input sample based on the input sample and the task attributes stored in the knowledge base module. The task determining module is configured to determine, based on the target task attribute determined by the attribute definition module, and the task attributes and the task models that are stored in the knowledge base module, whether the inference task corresponding to the input sample is an unknown task. When the task processing apparatus is deployed, both the attribute definition module and the task determining module in the task processing apparatus may be deployed in the edge side network. Certainly, during actual application, both the attribute definition module and the task determining module may be deployed in the cloud, or the like. This is not limited in this application.

In a possible implementation, the knowledge base module is deployed in the cloud. In this way, based on a cloud resource, the knowledge base module may provide large-scale data such as models, samples, and other information, so that the task learning system can more easily identify the inference task corresponding to the input sample as a known task. This can improve inference efficiency of the input sample, and improve inference accuracy of the input sample. In addition, even if the inference task corresponding to the input sample belongs to an unknown task, the knowledge base module in the cloud may also provide data such as more similar task models. Therefore, there is a high probability that the task learning system can improve an inference effect of the unknown task based on the data. Certainly, in another possible implementation, the knowledge base module may alternatively be deployed in a distributed manner. To be specific, a plurality of sub-knowledge bases may be deployed in the edge side network, and knowledge stored in each sub-knowledge base may be some knowledge stored in the knowledge base module in the cloud. Deployment of the knowledge base module is not limited in this application.

In a possible implementation, the task processing apparatus may be further configured to update, based on the target task attribute of the input sample and the generated inference model, the task attributes and the task models that are stored in the knowledge base module. Therefore, when a same inference task is subsequently stored, inference on the inference task may be implemented by using updated knowledge stored in the knowledge base module.

In a possible implementation, when updating the knowledge in the knowledge base module, the task processing apparatus may specifically add the target task attribute of the input sample and the generated inference model to the knowledge base module. In this case, the knowledge base module simultaneously stores the existing task attributes, the target task attribute, the existing task models, and the inference model. In this way, new knowledge is added on the basis of retaining existing knowledge, so as to implement knowledge accumulation of the knowledge base module.

In a possible implementation, when updating the knowledge stored in the knowledge base module, the task processing apparatus may specifically replace a corresponding task attribute in the knowledge base module with the target task attribute of the input sample; and replace a corresponding task model in the knowledge base module with the newly generated inference model. In this way, the knowledge stored in the knowledge base module can be always latest knowledge.

In a possible implementation, the task processing apparatus may include a knowledge base update module. The knowledge base update module may be configured to update, based on the target task attribute of the input sample and the newly generated inference model, the task attributes and the task models that are stored in the knowledge base module. The knowledge base update module may be deployed in the cloud or the edge side network. When the knowledge base update module is deployed in the cloud, the knowledge base update module may update, in the cloud by using more data such as training samples and task models and more computing resources, the knowledge stored in the knowledge base module, so as to achieve a better update effect. However, when the knowledge base update module is deployed in the edge side network, both the input sample and intermediate data involved in a process of performing inference on the input sample may be located in the edge side network, so that user data privacy can be effectively protected. In another implementation, the knowledge base update module may alternatively be deployed in a distributed manner, or the like. This is not limited in this application.

In a possible implementation, when the inference model includes a plurality of models, and when performing inference on the input sample by using the inference model, the task processing apparatus may specifically perform inference on the input sample by using all the models in the inference model, to obtain inference results that are output by all the models; and then determine the target inference result in the inference results that are output by all the models. For example, a largest quantity of same or similar inference results in the plurality of inference results may be used as a final target inference result through voting; or an average value of the plurality of inference results is calculated, and the average value is used as a final target inference result.

According to a second aspect, an embodiment of this application further provides a task learning method. The method includes: obtaining an input sample; when an inference task corresponding to the input sample is an unknown task, generating an inference model for the unknown task based on task attributes and task models corresponding to the task attributes in a knowledge base; and performing inference on the input sample by using the inference model, to obtain a target inference result.

In a possible implementation, the method further includes: determining a target task attribute of the input sample based on the input sample and the task attributes; and determining, based on the target task attribute, and the task attributes and the task models in the knowledge base, that the inference task corresponding to the input sample is an unknown task.

In a possible implementation, the determining, based on the target task attribute, and the task attributes and the task models in the knowledge base, that the inference task corresponding to the input sample is an unknown task includes: determining, based on a difference between the target task attribute and the task attribute in the knowledge base, that the inference task corresponding to the input sample is an unknown task.

In a possible implementation, the determining, based on the target task attribute, and the task attributes and the task models in the knowledge base, that the inference task corresponding to the input sample is an unknown task includes: determining, based on any one or more of confidence of performing inference on the input sample by using the task model, a model migration rate, and task model quality, that the inference task corresponding to the input sample is an unknown task.

In a possible implementation, the generating an inference model for the unknown task based on task attributes and task models corresponding to the task attributes in a knowledge base includes: generating the inference model for the unknown task based on the target task attribute, and the task attributes and the task models in the knowledge base.

In a possible implementation, the knowledge base further stores a task relationship, where the task relationship includes a subordinate relationship and/or a migration relationship. The generating an inference model for the unknown task based on task attributes and task models corresponding to the task attributes in a knowledge base includes: generating the inference model for the unknown task based on the target task attribute, the task attributes and the task models in the knowledge base, and the task relationship.

In a possible implementation, the generating an inference model for the unknown task based on task attributes and task models corresponding to the task attributes in a knowledge base includes: determining a plurality of candidate task models in the task models based on the target task attribute; and using the plurality of candidate task models as the inference model.

In a possible implementation, the knowledge base further stores training samples corresponding to the task attributes. The generating an inference model for the unknown task based on task attributes and task models corresponding to the task attributes in a knowledge base includes: determining, based on the target task attribute, training samples respectively corresponding to a plurality of candidate task models in the task models; and retraining one or more candidate task models based on the training samples respectively corresponding to the plurality of candidate task models, and using, as the inference model, one or more candidate task models obtained through retraining.

In a possible implementation, the knowledge base further stores training samples corresponding to the task attributes.

The generating an inference model for the unknown task based on task attributes and task models corresponding to the task attributes in a knowledge base includes: determining, based on the target task attribute, training samples respectively corresponding to a plurality of candidate task models in the task models; and performing training based on the training samples respectively corresponding to the plurality of candidate task models, to obtain a new task model, and using the new task model as the inference model.

In a possible implementation, the method further includes: updating a task attribute and a task model in the knowledge base based on the target task attribute of the input sample and the inference model.

In a possible implementation, the updating a task attribute and a task model in the knowledge base based on the target task attribute of the input sample and the inference model includes: adding the target task attribute and the inference model to the knowledge base, so that the knowledge base simultaneously stores the existing task attributes, the target task attribute, the task models, and the inference model.

In a possible implementation, the updating a task attribute and a task model in the knowledge base based on the target task attribute of the input sample and the inference model includes: replacing a corresponding task attribute in the knowledge base with the target task attribute; and replacing a corresponding task model in the knowledge base with the inference model.

In a possible implementation, when the inference model includes a plurality of models, the performing inference on the input sample by using the inference model, to obtain a target inference result includes: performing inference on the input sample by using all the models, to obtain inference results that are output by all the models; and determining the target inference result in the inference results that are output by all the models.

The task learning method according to the second aspect corresponds to the task learning system according to the first aspect. Therefore, for specific implementation of any implementation of the second aspect and a technical effect thereof, refer to the related descriptions of the first aspect.

According to a third aspect, an embodiment of this application provides a device. The device includes: a processor and a memory. The memory is configured to store instructions. When the device runs, the processor executes the instructions stored in the memory, so that the device performs the task learning method according to any one of the second aspect or the implementations of the second aspect. It should be noted that the memory may be integrated into the processor, or may be independent of the processor. The device may further include a bus. The processor is connected to the memory through the bus. The memory may include a readable memory and a random access memory

According to a fourth aspect, an embodiment of this application further provides a readable storage medium. The readable storage medium stores a program or instructions, and when the program or the instructions are run on a computer, the task learning method according to any one of the second aspect or the implementations of the second aspect is performed.

According to a fifth aspect, an embodiment of this application further provides a computer program product including instructions. When the computer program product runs on a computer, the computer is enabled to perform the task learning method according to any one of the second aspect or the implementations of the second aspect.

In addition, for technical effects brought by any implementation of the second aspect to the fifth aspect, refer to technical effects brought by different implementations of the first aspect.

## BRIEF DESCRIPTION OF DRAWINGS

To describe technical solutions of embodiments of this application more clearly, the following briefly describes the accompanying drawings for describing embodiments. It is clear that the accompanying drawings in the following descriptions show merely some embodiments of this application, and a person of ordinary skill in the art may derive other drawings from these accompanying drawings.

FIG. 1 is a schematic diagram of an example of a machine learning process;
FIG. 2 is a schematic diagram of a structure of an example of a task learning system according to an embodiment of this application;
FIG. 3 is a schematic diagram of a task association relationship in a knowledge base according to an embodiment of this application;
FIG. 4 is a schematic diagram of a task association relationship in another knowledge base according to an embodiment of this application;
FIG. 5 is a schematic diagram of an example of an inference target input interface according to an embodiment of this application;
FIG. 6 is a schematic diagram of an example of knowledge update according to an embodiment of this application;
FIG. 7 is a schematic diagram of an example of knowledge update according to an embodiment of this application;
FIG. 8 is a schematic diagram of deployment of each module in a task learning system 200 according to an embodiment of this application;
FIG. 9 is a schematic diagram of deployment of each module in another task learning system 200 according to an embodiment of this application;
FIG. 10 is a schematic principle diagram of outputting a DMD by an unsupervised model based on a target task attribute according to an embodiment of this application;
FIG. 11 is a schematic diagram of determining an MMD by using a confidence model according to an embodiment of this application;
FIG. 12 is a schematic diagram of chiller energy consumption data stored in a knowledge base;

FIG. 13 is a schematic diagram of generating an inference model by combining a plurality of known task models according to an embodiment of this application;

FIG. 14 is a schematic diagram of different shooting scenarios according to an embodiment of this application;

FIG. 15 is a schematic flowchart of a task learning method according to an embodiment of this application; and

FIG. 16 is a schematic diagram of a hardware structure of a device according to an embodiment of this application.

## DESCRIPTION OF EMBODIMENTS

Terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

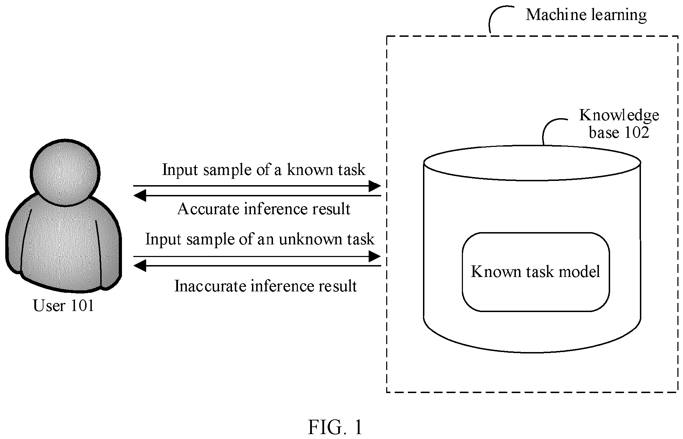

As shown in FIG. 1, in a machine learning process, a process of performing machine learning on an input sample provided by a user 101 is usually considered as a known task by default. In other words, the input sample provided by the user is considered by default to be the same as or similar to a training sample used for machine learning model training, so that a known machine learning model stored in a knowledge base 102 can be used to perform inference on the input sample, and an accurate inference result can be obtained. However, in some actual application scenarios, the input sample provided by the user 101 may be greatly different from the training sample used for machine learning model training. In this case, accuracy of an inference result obtained by performing inference on the input sample by using the known machine learning model may be low. For example, in a facial recognition scenario, a machine learning model may be trained by using one or more groups of samples including daytime face images. In this way, when the input sample provided by the user is a daytime sample, a face included in the sample can be accurately recognized by using the machine learning model. However, when the input sample provided by the user is a sample including a night face image, because light brightness reflected in the sample is dark, when facial recognition is performed by using the machine learning model, facial recognition accuracy may be greatly reduced.

Based on this, an embodiment of this application provides a task learning system. When an inference task corresponding to an input sample provided by a user is an unknown task, the task learning system may automatically generate a new inference model for the unknown task, to perform inference on the input sample by using the new inference model, so as to obtain an accurate target inference result. In this way, when the input sample provided by the user is greatly different from a training sample of a known task model, the new inference model may be automatically generated for the input sample, and inference on the input sample is completed by using the newly generated inference model. Therefore, inference accuracy of the input sample can be effectively improved, and the user does not need to customize an inference model, so that customization costs of the user are reduced.

To make the objectives, features, and advantages of this application more apparent and understandable, the following describes various non-limiting implementations in embodiments of this application with reference to the accompanying drawings by using examples. It is clear that the described embodiments are some but not all of embodiments of this application. All other embodiments obtained by a person of ordinary skill in the art based on embodiments of this application without creative efforts shall fall within the protection scope of this application.

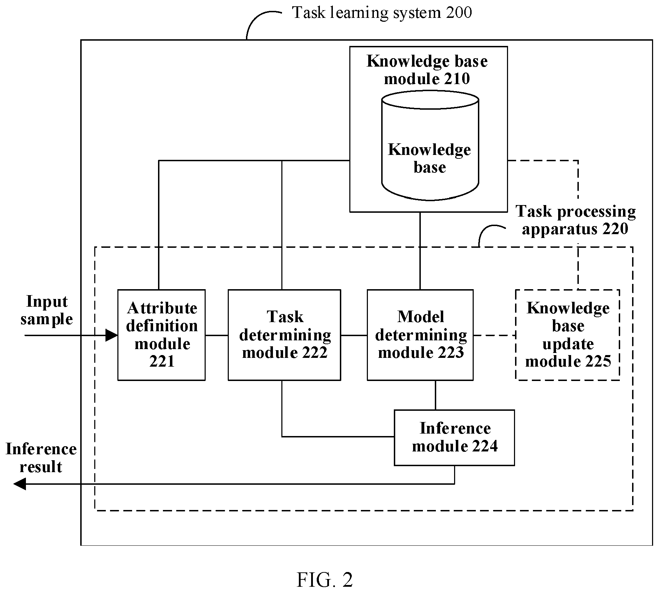

FIG. 2 is a schematic diagram of an architecture of a task learning system according to an embodiment of this application. As shown in FIG. 2, the task learning system 200 may include a knowledge base module 210 and a task processing apparatus 220. The task processing apparatus 220 may generate an inference model by using data (knowledge) stored in the knowledge base module 210, and perform, by using the inference model, inference on an input sample provided by a user. Certainly, when an inference task corresponding to the input sample belongs to a known task, the task processing apparatus 220 may perform inference on the input sample by using an existing task model in the knowledge base module 210.

In an example implementation, the task processing apparatus 220 may include an attribute definition module 221, a task determining module 222, a model determining module 223, and an inference module 224.

The knowledge base module 210 may be configured to store and retrieve task information. In this embodiment, the task information stored in the knowledge base module 210 may be specifically task attributes and task models corresponding to the task attributes.

The task attribute may include a task attribute category and an attribute value. For example, in a facial recognition scenario, one task attribute may be video or picture shooting weather (a shot video or picture is used as a corresponding model input). In this case, a task attribute category is shooting weather, and an attribute value is a value used to indicate weather such as "sunny" or "rainy". During actual application, the task attributes stored in the knowledge base module 210 may be defined by the user or a technical expert and pre-added to the knowledge base module 210. Certainly, the task attributes may alternatively be added to the knowledge base module 210 in another manner. For example, as described below, the task processing apparatus 220 further includes a knowledge base update module 225, configured to update a new task attribute to the knowledge base module 210.

The task model corresponding to the task attribute is a machine learning model obtained through training by using a training sample having the task attribute. The task model is used to perform inference on an input sample having the task attribute, and output a corresponding inference result. When storing the task model, the knowledge base module 210 may further store information such as a training method, a model hyperparameter, and a model parameter corresponding to the task model. The training method is a machine learning algorithm used by the task model, for example, may be a machine learning algorithm of a neural network or a support vector machine. The model hyperparameter is a configuration item of the machine learning algorithm, and is a parameter that is set in the task model before the model is trained, for example, a learning rate in the neural network. The model parameter is a parameter that is in the model and that is determined by training the task model, for example, a weight in the neural network or a support vector in the support vector machine.

In an example, the knowledge base module 210 may be specifically implemented by using a knowledge base having storage and retrieval capabilities, and information stored in the knowledge base is the foregoing task information. For example, the knowledge base module 210 may further store a training sample corresponding to each task model. The training sample corresponding to each task model is used to train the task model, and the training sample may be a labeled sample and/or an unlabeled sample. In addition, because different samples are used to train task models for implementing different tasks, the knowledge base module 210 may further store a task constraint corresponding to each task model, for example, a lower limit of a quantity of training samples, so as to prevent, as much as possible, low inference accuracy of each task model due to a small quantity of training samples.

In a possible implementation, the task attribute stored in the knowledge base module 210 may be generated in a clustering manner Specifically, a data set may be obtained. The data set may be data in the training sample, or may be other data. Then, clustering may be performed in the data set, and similar data items in the data set are extracted, to obtain one or more cluster sets. Then, a similarity between data items in each cluster set is calculated, and a similarity variance (variance) is further calculated based on the similarity. Therefore, a cluster set whose similarity variance is less than a preset value may be determined as a category, and the category is used as one task attribute. Certainly, the task attribute may alternatively be determined in another manner, for example, generated in a manner such as a model manner or a setting manner. A specific implementation of constructing the task attribute is not limited in this embodiment.

During actual application, some tasks may be associated with each other. For example, if a temperature change of city A in winter is similar to a temperature change of city B in autumn, a temperature prediction task of city A in winter is similar to a temperature prediction task of city B in autumn. Therefore, in some application scenarios, a winter temperature of city A may be predicted by using an autumn temperature prediction model of city B. Based on this, in a further possible implementation, the knowledge base module 210 may further store a task relationship between different tasks. The task relationship between different tasks may be, for example, a subordinate relationship or a migration relationship. The subordinate relationship means that one task may be considered as a child task of another task. For example, after an autumn temperature prediction task a of city A and a winter temperature prediction task b of city A are combined, an autumn-winter temperature prediction task c of city A may be obtained. In this case, the task a and the task b may be considered as child tasks of the task c, and the subordinate relationship is met. Therefore, the task a or the task b may be implemented by using a task model corresponding to the task c (certainly, inference accuracy of the task model may be reduced). In addition, the subordinate relationship may be measured by using a subordinate degree. The migration relationship means that a task model for implementing one task may also be used to implement another task (certainly, inference accuracy of the task model may be reduced). For example, the foregoing model for predicting the winter temperature change of city A may also be used to predict the autumn temperature change of city B. In addition, the migration relationship may be measured by using a migration degree. In this embodiment, an example in which the task relationship is the subordinate relationship and the migration relationship is used. In other embodiments, the task relationship may alternatively be a relationship between other tasks. This is not limited in this embodiment. It may be understood that the task relationship between different tasks may alternatively be a relationship between different task models for implementing different tasks.

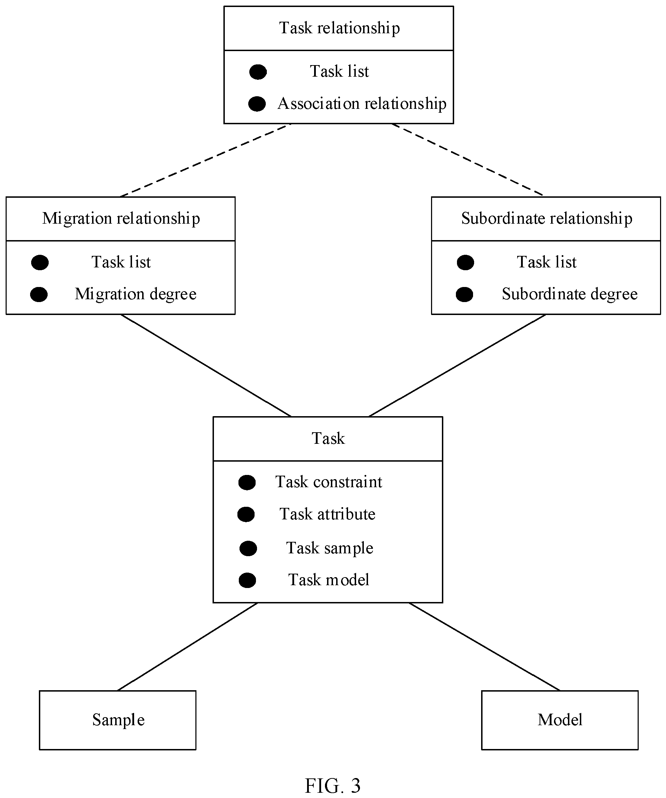

Generally, different task models are used to perform inference on samples belonging to different tasks. Therefore, to help the knowledge base module 210 perform information query and management, the knowledge base module 210 may further store a task corresponding to each task model, for example, a facial recognition task or an air conditioner performance prediction task. Correspondingly, each task may have information such as the task attribute, the training sample, the task model, the task constraint, and the task relationship, and a task association relationship shown in FIG. 3 can be established in the knowledge base.

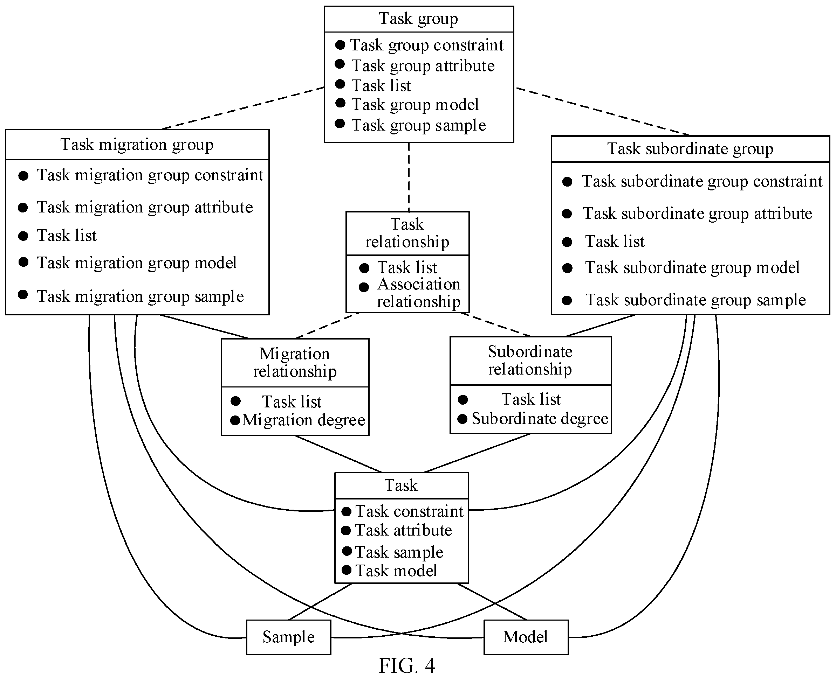

The knowledge base module 210 may further cluster different stored tasks, so as to aggregate a plurality of tasks with similar relationships into one group. The group is referred to as a task group below. The task group may include one or more tasks. Similarly, each task group may have a corresponding task group attribute, a corresponding task group constraint (for example, a smallest quantity of samples included in the task group), a corresponding task list, a corresponding task group sample (a set of training samples of a plurality of task models), and a corresponding task group model (that is, a model used to implement each task in the task group), so that a task association relationship shown in FIG. 4 can be established in the knowledge base.

When the user provides the input sample, the attribute definition module 221 may determine a target task attribute of the input sample based on the input sample and the task attributes stored in the knowledge base module 210, so as to subsequently determine whether the inference task corresponding to the input sample is an unknown task.

In an implementation example, when the input sample is specifically data item information, the attribute definition module 221 may match the input sample against each task attribute stored in the knowledge base module 210, to determine a task attribute category included in the input sample, and further determine an attribute value corresponding to the task attribute category. For example, in an air conditioner performance prediction scenario, the input sample provided by the user may include data information "season", so as to match one task attribute "season" stored in the knowledge base module 210. In this case, a task attribute category corresponding to the input sample may be determined as "season", and an attribute value "summer" of the task attribute category may be further read from the input sample.

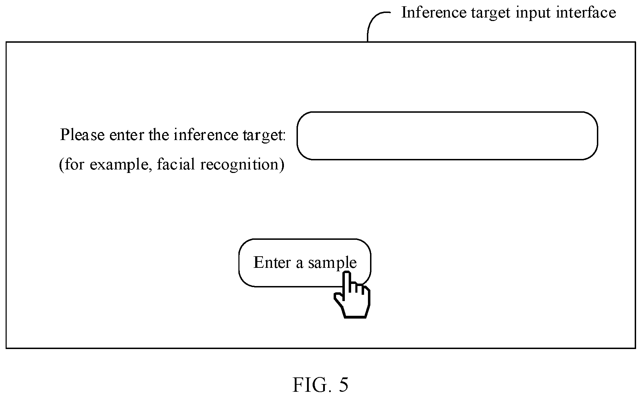

However, in another example, when the input sample does not belong to a data item, the attribute definition module 221 may extract the target task attribute corresponding to the input sample by using a pre-trained classifier. For example, in a face detection scenario, the task attribute stored in the knowledge base module 210 includes shooting weather. In this case, the attribute definition module 221 may classify an input sample (a picture or a video) by using a classifier corresponding to the shooting weather, and use, as a target task attribute corresponding to the input sample (specifically, as an attribute value of the target task attribute), a classification result "sunny" that is output by the classifier. The attribute definition module 221 may determine a task attribute category based on an inference target entered by the user, and determine an attribute value of the task attribute category by using the classifier corresponding to the task attribute category. For example, the task learning system may provide the user with an inference target input interface shown in FIG. 5, and the user enters an inference target on the inference target input interface. For example, the user may enter "facial recognition", so that the attribute definition module 221 may determine an attribute value by using a classifier corresponding to the inference target "facial recognition". The user may further provide an input sample for the task learning system by tapping an "Enter a sample" button on the task input interface.

After determining the target task attribute of the input sample, the task determining module 222 may determine, based on the target task attribute and the task information stored in the knowledge base module 210, whether the inference task corresponding to the input sample is an unknown task. When it is determined that the inference task is an unknown task, it indicates that it is difficult to accurately perform inference on the input sample by using each task model currently stored in the knowledge base module 210. However, when it is determined that the inference task is a known task (that is, not an unknown task), it indicates that accurate inference can be performed on the input sample by using one task model currently stored in the knowledge base module 210.

In a task determining example, the task determining module 222 may determine, based on a difference between the target task attribute and the task attribute in the task information, that the inference task corresponding to the input sample is an unknown task. Specifically, when the task determining module 222 determines that the difference between the target task attribute and the task attribute stored in the knowledge base module 210 is small, the input sample and a training sample that is used for model training and that corresponds to the task attribute have similar task attributes, so that a task model trained by using the training sample is also generally applicable to inference on the input sample. In this case, the task determining module 222 may determine that the inference task corresponding to the input sample is a known task, and inference may be performed on the input sample by using the corresponding task model stored in the knowledge base module 210. However, when the task determining module 222 determines that the difference between the target task attribute and each task attribute stored in the knowledge base module 210 is large, it indicates that the input sample and the training sample corresponding to each task model have different task attributes, and it may be difficult for each task model stored in the knowledge base module 210 to perform accurate inference on the input sample. In this case, the task determining module 222 may determine that the inference task corresponding to the input sample is an unknown task.

For example, the difference between the target task attribute and each task attribute stored in the knowledge base module 210 may be specifically measured by using a minimum editing distance. A larger minimum editing distance indicates a larger difference between the task attributes. On the contrary, a smaller minimum editing distance indicates a smaller difference between the task attributes. During specific implementation, the task determining module 222 may calculate a minimum editing distance between an attribute value of the target task attribute and an attribute value of each task attribute in the knowledge base module 210, and compare the minimum editing distance between the target task attribute and each task attribute stored in the knowledge base module 210 with an editing distance threshold. When there is a task attribute whose minimum editing distance from the target task attribute is less than the editing distance threshold, it indicates that a difference between the two task attributes is small, so that the task determining module 222 can determine that the inference task corresponding to the input sample provided by the user belongs to a known task. When there is no task attribute whose minimum editing distance from the target task attribute is less than the editing distance threshold, it indicates that a difference between the two task attributes is large, so that the task determining module 222 can determine that the inference task corresponding to the input sample belongs to a known task. Certainly, in another example, the difference between the two task attributes may alternatively be measured in another manner. This is not limited in this embodiment.

In another task determining example, the task determining module 222 may determine, based on any one or more of confidence of performing inference on the input sample by using the task model in the task information, a model migration rate for the input sample, and task model quality, whether the inference task corresponding to the input sample is an unknown task.

The confidence of performing inference on the input sample by using the task model is a degree of credibility of an inference result that is output after the task model performs inference on the input sample. When the confidence is high (for example, is greater than a preset confidence threshold), it may be considered that the task model is suitable for inference on the input sample. In this case, the task determining module 222 may determine that the inference task corresponding to the input sample is a known task. However, when the confidence is low, it may be considered that the task model is not suitable for inference on the input sample. In addition, if the confidence of performing inference on the input sample by using each task model stored in the knowledge base module 210 is low, the task determining module 222 may determine that the inference task corresponding to the input sample is an unknown task.

For example, the confidence of performing inference on the input sample by using the task model may be determined by using a confidence model corresponding to the task model. Specifically, for each task model stored in the knowledge base module 210, the confidence model may be pre-trained for the task model. The confidence model may be constructed based on the neural network or the support vector machine. In addition, when the confidence model is trained, an input is a known sample stored in the knowledge base module 210, and an output is an error rate of predicting the known sample by using the task model (the prediction error rate may be, for example, manually marked in advance). In this way, the confidence model may be obtained through iterative training by using a specific quantity of samples. In this way, for the input sample provided by the user, the input sample may be input into the confidence model corresponding to the task model, and the confidence model outputs the confidence of performing inference on the input sample by using the task model.

The model migration rate for the input sample is an appropriateness degree of performing inference on the input sample by using a known task model stored in the knowledge base module 210. A larger model migration rate indicates that the known task model is more suitable for being used as a model for inference on the input sample, and correspondingly accuracy of an obtained inference result is usually higher When the model migration rate is greater than a preset migration rate threshold, the task determining module 222 may determine that the inference task corresponding to the input sample is a known task. In this case, a model for performing inference on the input sample is the task model. On the contrary, a smaller model migration rate indicates that the task model is generally less suitable for being used as a model for inference on the input sample. In addition, when the model migration rate corresponding to each task model stored in the knowledge base module 210 is less than the preset migration rate threshold, the task determining module 222 may determine that the inference task corresponding to the input sample is an unknown task.

For example, the model migration rate may be determined based on a sample similarity. Specifically, for each task model, the task determining module 222 may calculate a sample similarity between the input sample and the training sample corresponding to the task model, so that the sample similarity can be used as the model migration rate corresponding to the task model. Certainly, in another embodiment, the model migration rate may alternatively be determined according to another implementation. For example, similar to the foregoing confidence, a machine learning model used to determine the model migration rate may also be obtained through training for the task model, so that the machine learning model can output, based on the input sample, the model migration rate corresponding to the task model. A specific implementation of determining the model migration rate is not limited in this embodiment.

The task model quality may be used to measure universality of the task model. For example, the task model quality may be a quantity of training samples of the task model. Generally, from the perspective of statistics, a larger quantity of samples for training the task model indicates higher reliability of performing inference on the input sample by using the task model, that is, the task model is more suitable for performing inference on the input sample. Therefore, when the quantity of training samples of the task model is greater than a preset sample quantity threshold, the task determining module 222 may determine that the inference task corresponding to the input sample is a known task. In this case, a model for performing inference on the input sample is the task model. However, when the knowledge base module 210 does not include a task model whose quantity of training samples is greater than the preset sample quantity threshold, the task determining module 222 may determine that the inference task corresponding to the input sample is an unknown task.

In another example, the task model quality may also be used to measure stability of testing diversified data sets by the task model. In this embodiment, when the task model tests a plurality of different data sets, if an output result of the task model always has high inference accuracy, it may be considered that model quality of the task model is high, and the task model may be used as a model for performing inference on the input sample. In this case, the task determining module 222 may determine that the inference task corresponding to the input sample is a known task. On the contrary, if there is no task model with high model quality in the plurality of task models stored in the knowledge base module 210, the task determining module 222 may determine that the inference task corresponding to the input sample is an unknown task. The stability of testing the diversified data sets by the task model may be measured by using inference accuracy of the task model for the diversified data sets. When the accuracy reaches a preset accuracy threshold, it may be determined that the task model has high stability, that is, the task model has high quality; otherwise, it is determined that the task model has low quality.

During actual application, the task determining module 222 may alternatively determine, based on a combination or any two of the confidence, the model migration rate, and the task model quality, whether the inference task corresponding to the input sample is an unknown task. Certainly, task determining may alternatively be implemented in a manner other than the manner in the foregoing example. This is not limited in this embodiment.

In some implementations, the task determining module 222 may divide the confidence, the model migration rate, and the task model quality into a plurality of levels for measurement, for example, into a single sample level, a task level, and a multi-task level. The single sample level is information such as confidence, a model migration rate, and task model quality that are obtained based on some of a plurality of training samples of the task model. Correspondingly, the task level is information such as confidence obtained by using all training samples of the task model, and the multi-task level is information such as confidence obtained by using training samples for training all tasks in a task group. In this way, information such as the confidence of the task model can be divided in detail from the perspective of a sample set hierarchy relationship.

When determining whether there is a task model for performing inference on the input sample in the plurality of task models stored in the knowledge base module 210, the task determining module 222 may further accelerate a determining process based on the task relationship. For example, if confidence or a model migration rate of a task model for performing inference on the input sample is low (that is, is less than a corresponding threshold), it is more likely that another task model that has a subordinate relationship or a migration relationship with the task model is usually not suitable for inference on the input sample. In this case, the task determining module 222 may not need to determine the another task model associated with the task model, but may continue to determine a remaining task model that does not have the foregoing task relationship with the task model. In this way, efficiency of determining, by the task determining module 222, whether the task is unknown may be improved because some task models do not need to participate in calculation.

When the task determining module 222 determines that the inference task corresponding to the input sample is an unknown task, the inference module 224 may perform, based on the known task model determined by the task determining module 222, inference on the input sample provided by the user, to obtain an inference result that is output by the task model, so that the inference module 224 may feed back the inference result to the user, so as to complete inference on the input sample.

However, when the task determining module 222 determines that the inference task corresponding to the input sample is an unknown task, it indicates that there is no task model that can accurately perform inference on the input sample in the plurality of task models stored in the knowledge base module 230. In this case, the task learning system 200 may generate a new task model for the unknown task by using the model determining module 223, to perform inference on the input sample by using the new model. Specifically, the model determining module 223 may generate a new task model (referred to as an inference model below for ease of description) for the unknown task based on the target task attribute, and the task attributes and the task models that are stored in the knowledge base module 210.

In an example of generating the inference model, the model determining module 223 may select, based on the target task attribute of the input sample, a plurality of candidate task models from the task models stored in the knowledge base module 210. A difference between a task attribute of each selected candidate task model and the target task attribute is small. For example, when a minimum editing distance is used to measure a difference between task attributes, the model determining module 223 may calculate a minimum editing distance between the target task attribute and each task attribute stored in the knowledge base module 210 (or reuse the minimum editing distance calculated by the task determining module 222), and further determine a task attribute whose minimum editing distance from the target task attribute is less than a preset threshold. In this case, a plurality of task models having the task attribute are the foregoing candidate task models. Then, the model determining module 223 may use the plurality of selected candidate task models as the inference model.

In the process of determining the inference model, the user may further participate in decision-making of the inference model. For example, for the plurality of selected task models, the user may perform corresponding parameter configuration, for example, may configure a constraint condition such as a bandwidth or a latency, so that a task model that is in the plurality of selected task models and that has the parameter configuration may be used as the inference model.

Correspondingly, the inference module 224 may perform inference on the input sample by using the plurality of selected candidate task models, to obtain a plurality of inference results. Then, the inference module 224 may calculate an average value of the plurality of inference results, and use the average value as a final target inference result of the input sample. Alternatively, the inference module 224 may determine a final inference result of the input sample from the plurality of inference results through voting, for example, use most same (or similar) inference results in the plurality of inference results as a final target inference result. In this way, the task learning system 200 may perform inference on the input sample by using a combination of existing task models, so that a new task model does not need to be retrained. Therefore, efficiency of processing the input sample by the task learning system 200 is high.

The model determining module 223 may further improve, with reference to the task relationship stored in the knowledge base module 210, efficiency of determining the inference model. For example, the model determining module 223 determines the inference model with reference to the task relationship. After determining one task model based on the target task attribute (a difference between a task attribute of the task model and the target task attribute is small), the model determining module 223 may use, as a selected candidate task model based on the task relationship, another task model that meets a subordinate relationship and/or a migration relationship with the task model. Therefore, the candidate task model does not need to be determined through task attribute comparison, so that efficiency of determining the inference model can be improved. The model determining module 223 may further determine the inference model with reference to a task group. Specifically, the model determining module 223 may use, as the inference model, each task model corresponding to a task group similar to the unknown task.

In another example of generating the inference model, the model determining module 223 may alternatively determine, in the task attributes stored in the knowledge base module 210, one or more task attributes whose differences from the target task attribute are small, and further determine, based on the one or more determined task attributes, a plurality of candidate task models having (all or some of) the task attributes. Because accuracy of a result of inference on the input sample by using each determined candidate task model may be low, the model determining module 223 may perform fine tuning on each determined candidate task model. Specifically, the model determining module 223 may first obtain all or some training samples corresponding to each candidate task model, and retrain each candidate task model by using the obtained training samples. In this way, a plurality of new candidate task models can be obtained through training, and the plurality of new candidate task models are the inference model.

Correspondingly, the inference module 224 may perform inference on the input sample by using the plurality of new candidate task models, and determine a final target inference result based on a plurality of obtained inference results. For details, refer to the foregoing descriptions of the process of obtaining the final inference result by using the plurality of selected candidate task models. Details are not described herein again. A new task model is obtained through training based on an existing task model. This can improve accuracy of inference on the input sample, and can also effectively reduce a model training time compared with a manner of directly obtaining a task model through training based on a training sample.

In another implementation, the model determining module 223 may alternatively retrain one candidate task model by using training samples corresponding to a plurality of candidate task models, and use, as the inference model, a candidate task model obtained through retraining, so that the inference module 224 can perform inference on the input sample based on only one candidate task model. Alternatively, in consideration of a resource limitation (for example, a resource is limited when the model determining module 223 is deployed in an edge side network), an operation such as pruning, quantization, or distillation may be performed on a plurality of candidate task models, so as to reduce a quantity of candidate task models used as the inference model. Alternatively, before a task model is retrained by using training samples corresponding to a plurality of candidate task models, a hyperparameter or a machine learning method of the task model may be further adjusted, and then the task model whose hyperparameter or machine learning method is adjusted is retrained by using the training samples.

In still another example of generating the inference model, the model determining module 223 may alternatively determine, based on the target task attribute, a plurality of candidate task models in the task models stored in the knowledge base module 210, and further obtain all or some of training samples respectively corresponding to the plurality of candidate task models. Then, the model determining module 223 may obtain a new task model through training based on the obtained training samples, and use the new task model as the inference model. In this way, the inference module 224 may perform inference on the input sample by using the inference model obtained through new training, to obtain a corresponding inference result. Because the new task model is obtained through retraining based on the training samples, accuracy of inference on the input sample by using the new task model usually may be high. Alternatively, the model determining module 223 may calculate a similarity between the input sample and a training sample in the knowledge base module 210, and perform retraining by using a training sample with a high similarity, to obtain the inference model.

Further, when a training sample of structured data is used to train the task model, a small quantity of training samples may be required. However, when a training sample of unstructured data is used to train the task model, a large quantity of training samples are usually required (to ensure inference accuracy of the task model). Therefore, in this embodiment, when determining that the training sample of the candidate task model is structured data, the model determining module 223 may directly obtain a new model through training by using training samples of a plurality of task models, and a small quantity of computing resources are usually required. When determining that the training sample of the candidate task model is unstructured data, the model determining module 223 may alternatively retrain each candidate task model by using training samples of a plurality of candidate task models (that is, perform fine tuning on each candidate task model), so as to reduce computing resource consumption. In this way, when the model determining module 223 is deployed in an edge side network, the inference model may be generated for the unknown task in this manner, so as to avoid a case in which inference efficiency of the task learning system 200 for the input sample is affected because the model determining module 223 responds slowly due to limited edge side network resources.

During actual application, the model determining module 223 may alternatively determine the inference model based on a found training sample. For example, if the model determining module 223 does not find a proper training sample in the knowledge base module 210, the model determining module 223 may perform inference on the input sample by using a preset domain model. The domain model may be constructed by using, for example, an inference formula in a specific domain. For example, the user may construct the domain model based on an empirical formula accumulated in the domain. If the model determining module 223 finds training samples by using the knowledge base module 210, and a quantity of the training samples is less than a preset value, the model determining module 223 may perform inference on the input sample by using task models corresponding to the training samples as the inference model. However, if the model determining module 223 finds training samples, and a quantity of the training samples is greater than the preset value (for example, may find training samples corresponding to a plurality of task models), the model determining module 223 may obtain a new task model through training by using the training samples, and use the new task model as the inference model to perform inference on the input sample.

In this way, based on the foregoing process, when the inference task corresponding to the input sample is a known task, inference on the input sample may be completed by using the known task models stored in the knowledge base module 210. However, when the inference task corresponding to the input sample is an unknown task, the inference model may be generated for the unknown task through a combination of the known task models, retraining, or the like, to complete inference on the input sample. In this way, when the user provides diversified input samples, the task learning system 200 can implement accurate inference on all the input samples.

In a further possible implementation, the task learning system 200 may further update, based on the inference task and data (knowledge) generated in a process in which the task learning system 200 processes the inference task, the data (knowledge) stored in the knowledge base module 210. Specifically, the task processing apparatus 220 may further include a knowledge base update module 225. The knowledge base update module 225 may update, based on the target task attribute and the inference model, the task attributes and the task models that are stored in the knowledge base module 210. For ease of description, the following uses an example in which the inference task corresponding to the input sample is an unknown task.

In an example, when the attribute value of the target task attribute is different from an attribute value of an existing task attribute stored in the knowledge base module 210, the knowledge base update module 225 may add the attribute value of the target task attribute to the knowledge base module 210. In addition, the knowledge base update module 225 may add the inference model corresponding to the target task attribute to the knowledge base module 210. For example, when the inference model of the unknown task is a task model obtained through retraining, the knowledge base update module 225 may add the task model obtained through retraining to the knowledge base module 210.

The knowledge base update module 225 may further add, to the knowledge base module 210, a training sample required for training the new task model. The training sample may be re-written into the knowledge base module 210. In this way, the knowledge base module 210 may store a plurality of same training samples for separately training known task models and currently added inference models. However, in another implementation, a correspondence between a training sample and a task model may alternatively be added to the knowledge base module 210. In this way, when a plurality of different task models are trained by using a same training sample, the correspondence may be used for indication, and the same training sample does not need to be repeatedly stored, so as to reduce storage resources occupied by the training sample in the knowledge base module 210. When the inference model of the unknown task is obtained by combining known task models, the knowledge base update module 225 may add the combination of the known task models to the knowledge base module 210, or may add, to the knowledge base module 210, indication information indicating the combination of the known task models (to reduce storage resources occupied in the knowledge base module 210).

In addition, in addition to the task attributes, the task models, and the samples that are stored in the knowledge base module 210, the knowledge base update module 225 may further update information such as a task, a task relationship, and a task group that are stored in the knowledge base module 210. For example, when updating a task, the knowledge base update module 225 may add the unknown task to the knowledge base module 210. When updating a task relationship, the knowledge base update module 225 may determine a relationship between the unknown task and a known task stored in the knowledge base module 210. For example, the knowledge base update module 225 determines a migration relationship between the unknown task and the known task by calculating a similarity between the input sample and a training sample corresponding to another task model, and adds the determined task relationship to the knowledge base module 210 (when the inference task is a known task, it may be determined that the inference task and the known task meet a subordinate relationship). When updating a task group, the knowledge base update module 225 may determine, in a manner such as clustering, a specific task group that is stored in the knowledge base module 210 and into which the unknown task may be clustered, so as to add the unknown task to the task group in the knowledge base module 210. For example, an identifier (such as a name) of the unknown task may be specifically added to a task list corresponding to the task group. However, when the unknown task cannot be classified into any task group stored in the knowledge base module 210, a new task group may be created in the knowledge base module 210, and a task included in the new task group is the unknown task.

It should be noted that, in this embodiment, that the knowledge base update module 225 updates the data (knowledge) stored in the knowledge base module 210 may be: adding new data (new knowledge) to the knowledge base module 210 on the basis of retaining existing data (existing knowledge), so as to implement knowledge accumulation of the knowledge base module 210. For example, after the knowledge base update module 225 updates, by using the target task attribute and the inference model, the knowledge stored in the knowledge base module 210, the knowledge base module 210 further stores the newly added target task attribute and inference model while storing the known task attributes and the task models. Through such a continuous/incremental machine learning mechanism (that is, lifelong learning), catastrophic forgetting of the task learning system 200 can be avoided, that is, existing knowledge becomes unknown due to a loss after the existing knowledge is updated with new knowledge.

Certainly, in another implementation, the knowledge base update module 225 may alternatively replace existing data (existing knowledge) stored in the knowledge base module 210 with new data (new knowledge). For example, when updating, by using the target task attribute and the inference model, the knowledge stored in the knowledge base module 210, the knowledge base update module 225 may replace a corresponding task attribute stored in the knowledge base module 210 with the target task attribute, and replace a corresponding task model stored in the knowledge base module 210 with the inference model. A specific implementation in which the knowledge base update module 225 updates the knowledge stored in the knowledge base module 210 is not limited in this embodiment.

The knowledge base update module 225 may further update task information corresponding to another task associated with the unknown task in the knowledge base module 210. For example, when the inference module 224 performs inference on the input sample by using the inference model obtained through retraining, the knowledge base update module 225 may add, to the knowledge base module 210, the inference model and the input sample for training the inference model, and may further update, by using the input sample another task model associated with the inference model (for example, a task model that has a subordinate or migration relationship with the inference model). Specifically, the another task model may be retrained by using the input sample, and a task model obtained through retraining is tested by using some data sets, so as to determine whether performance of the task model obtained through retraining is improved, for example, determine whether inference accuracy of the task model is improved. In this case, if the performance of the task model obtained through retraining is better, the knowledge base update module 225 may replace the task model that is not updated with the task model obtained through retraining. On the contrary, if the performance of the task model obtained through retraining is not improved (even degraded), the knowledge base update module 225 may not update the known task model. In this way, the knowledge base update module 225 may update, by using knowledge generated when the task learning system 200 processes the unknown task, known knowledge that is affected by the new knowledge and that is stored in the knowledge base module 210.

For example, the knowledge base update module 225 may update, by using an update method such as knowledge inheritance, knowledge accumulation, knowledge merging, or knowledge remodeling, the known knowledge that is affected by the new knowledge and that is stored in the knowledge base module 210.

The knowledge inheritance means that existing knowledge stored in the knowledge base module 210 continues to be used. For example, when the known knowledge stored in the knowledge base module 210 is not affected by new knowledge, the known knowledge (such as a task attribute, a task relationship, a task model, and a training sample) may continue to be used, that is, may not be updated.

The knowledge accumulation means completely adding new knowledge to the knowledge base module 210. For example, when an unknown task is processed by using an inference model obtained through retraining, information such as a target task attribute of the unknown task, an inference model, a sample for training the inference model, a task relationship, and a task group may be added to the knowledge base module 210 as new knowledge. For example, the knowledge base module 210 may store five known models for respectively predicting energy consumption of chillers of different models (that is, five chillers correspond to the five known models). In this case, when the unknown task is to predict energy consumption of a new chiller, a new inference model generated for the new chiller is greatly different from the five known task models, so that the inference model can be added to the knowledge base module 210. In this case, the knowledge base module 210 may store six task models. For example, when determining that a degree of matching between the target task attribute and any task attribute stored in the knowledge base module 210 is less than a preset value, the knowledge base update module 225 may update the task attribute through knowledge accumulation.

The knowledge merging mean merging new knowledge with existing knowledge stored in the knowledge base module 210. For example, when the target task attribute and a known task attribute stored in the knowledge base module 210 meet a subordinate relationship, the target task attribute may be merged into the known task attribute, that is, an attribute category of the known task attribute remains unchanged, and a quantity of attribute values increases. For another example, the knowledge base module 210 still stores five known models for respectively predicting energy consumption of chillers of different models. When the task learning system 200 predicts energy consumption of the sixth chiller that is newly added, an attribute of the sixth chiller is different from an attribute of each of the other five chillers, but a model for predicting the sixth chiller matches the known model for predicting the third chiller. In this case, a task attribute and a sample that are stored in the knowledge base module 210 and that are used to predict an energy consumption task of the third chiller may be extended to include task attributes and samples of the third chiller and the sixth chiller. In this case, a quantity of known task models stored in the knowledge base module 210 remains unchanged, but an application range of a task model for predicting the energy consumption of the third chiller changes. For example, when determining that a degree of matching between the target task attribute and any one or more of task attributes stored in the knowledge base module 210 is greater than a preset value, the knowledge base update module 225 may perform knowledge update through knowledge merging.

The knowledge remodeling means updating the known knowledge by using new knowledge and the known knowledge stored in the knowledge base module 210 (updated knowledge may be different from the new knowledge). For example, after another task model associated with the inference model is retrained by using a sample for training the inference model, performance of the another task model is improved. In this case, another task model obtained through retraining may be used to update the original another task model, that is, remodeling of the another task model is completed. For example, in the foregoing example, when new data in the third chiller is added to the knowledge base module 210, the known model may be retrained by using a training sample of the known model corresponding to the third chiller and the new data.

In an example, when updating the known knowledge stored in the knowledge base module 210, the knowledge base update module 225 may specifically update information such as a task attribute, a task relationship, a task group, a model, and a sample that are stored in the knowledge base module 210. In this case, the foregoing update manners may be updated with corresponding knowledge, as shown in Table 1.

**Table 1**

|  | Task attribute | Task relationship, task group, model, and sample |
|---|---|---|
| Knowledge inheritance | Continue to use | Continue to use |
| Knowledge accumulation | Update | Update |
| Knowledge merging | Update | Continue to use |
| Knowledge remodeling | Continue to use | Update |

In Table 1, "continue to use" means that existing knowledge continues to be used, that is, the existing knowledge remains unchanged; and "update" means updating the existing knowledge (including adding new knowledge and/or modifying known knowledge based on the known knowledge).

An example of updating a task attribute and a task relationship is used. The knowledge base update module 225 may update the task attribute in a form of a tree, and update the task relationship in a form of a matrix.

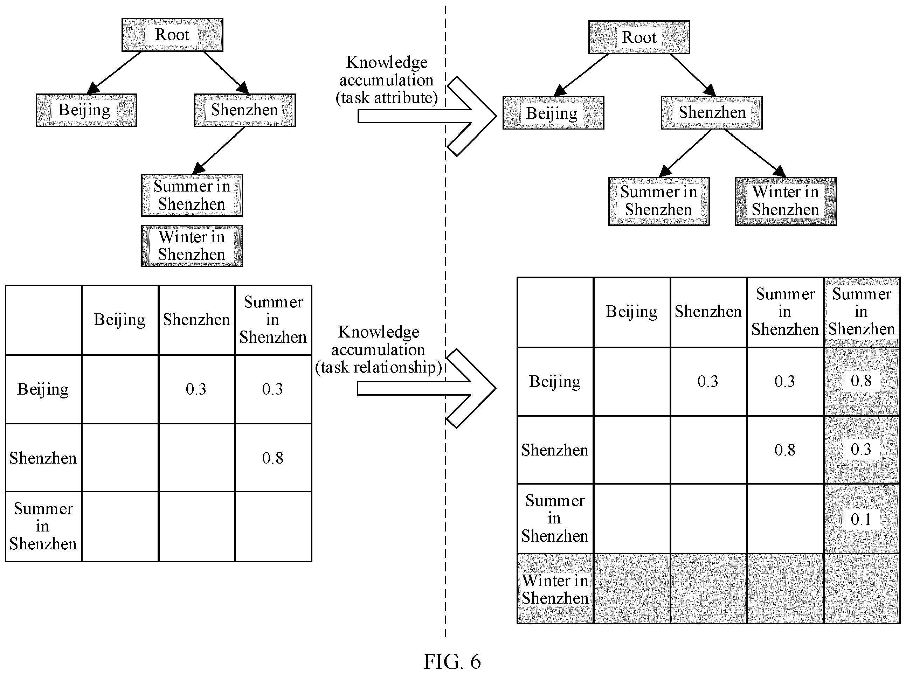

As shown in FIG. 6, the knowledge base update module 225 may perform knowledge accumulation on the task attribute and the migration relationship. Specifically, before the update, the task attributes stored in the knowledge base module 210 include three task attributes: "Beijing", "Shenzhen", and "summer in Shenzhen". In addition, a "Root" node is used as a root node, and the task attributes are used as intermediate nodes or leaf nodes, to obtain a structure tree shown in a left diagram in FIG. 6. A degree of migration between known models stored in the knowledge base module 210 is shown in a left matrix in FIG. 6. A value "0.3" of intersection between a row in which the task attribute "Beijing" is located and a column in which the task attribute "Shenzhen" is located indicates that a migration degree of a temperature of "Shenzhen" is predicted to be 0.3 by using a task model for predicting a temperature of "Beijing" (the migration degree is used to measure a migration relationship). Similarly, a value "0.8" indicates that a migration degree of "summer in Shenzhen" is predicted to be 0.8 by using a task model for predicting the temperature of "Shenzhen". When updating a target task attribute (that is, a newly added task attribute) "winter in Shenzhen" to the knowledge base module 210, the knowledge base update module 225 may update the target task attribute to an existing structure tree through knowledge accumulation, as shown in a right diagram in FIG. 6; and update, through knowledge accumulation, a mobility matrix stored in the knowledge base module 210, as shown in a right shadow area in FIG. 6.

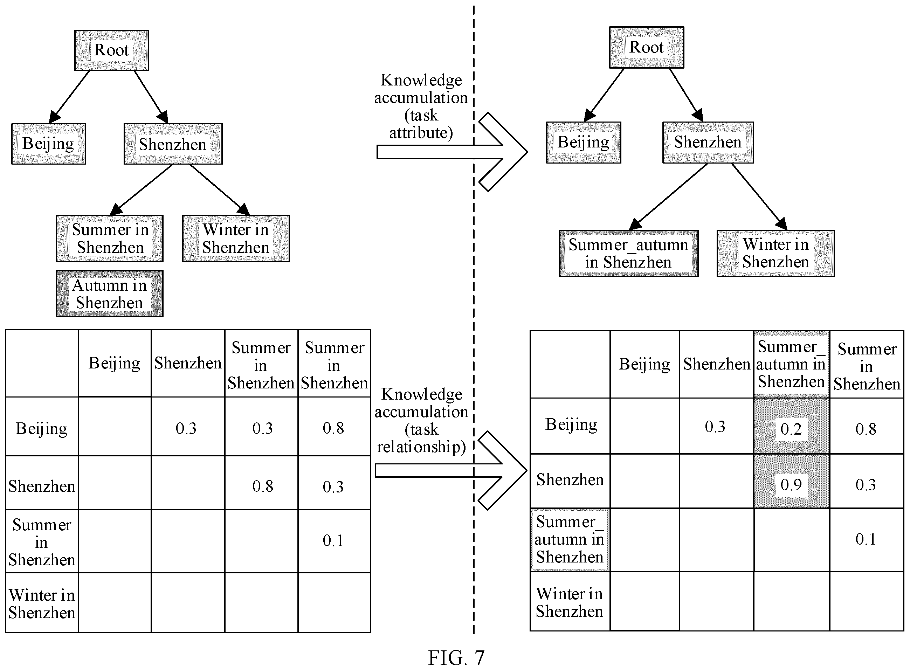

On the basis of the foregoing knowledge accumulation update shown in FIG. 6, when there is a new task attribute, the knowledge base update module 225 may continue to use the new task attribute to further update the structure tree and the mobility matrix that are obtained through knowledge accumulation. As shown in FIG. 7, the knowledge base update module 225 may perform update based on a new task attribute "autumn in Shenzhen" through knowledge merging.

Specifically, because a temperature change of Shenzhen in summer is similar to a temperature change of Shenzhen in winter, the knowledge base update module 225 may merge the task attribute "summer in Shenzhen" with the task attribute "autumn in Shenzhen" to obtain a task attribute " summer_autumn in Shenzhen". In addition, the knowledge base update module 225 may further perform corresponding calculation and update the mobility matrix, as shown in a right diagram in FIG. 7.

During actual application, the knowledge base update module 225 may further adjust, based on an operation of the user or the technical expert, the known knowledge stored in the knowledge base module 210. For example, the user may perform inference result annotation on the input sample, so that adjustment such as knowledge merging (for example, sample merging) or knowledge remodeling (for example, an operation of retraining a known task model by using the input sample) can be performed on the known knowledge by using the annotated input sample. Alternatively, how to adjust the known knowledge may be determined by using a pre-completed classifier. For example, information such as a task attribute, a task relationship, and a task group may be used as an input in advance, and a knowledge update manner is used as an output to complete training of a classifier, so that the knowledge base update module 225 can use the classifier to output an update manner based on a target task attribute corresponding to a current input sample, a task relationship, and a task group to which the current input sample belongs. For example, the classifier may determine, based on the task attribute, an application range of an inference model for performing inference on the input sample, and determine, based on the task relationship and the task group, a degree of matching between the inference model and a known model. Therefore, the update manner that can be output by the classifier may be shown in Table 2.

**Table 2**

| | Model matched | Model mismatched |
|---|---|---|
| Range matched | Knowledge inheritance (known task) | Knowledge remodeling (a known model can be updated) /Knowledge accumulation (unknown task) |
| Range mismatched | Knowledge merging (a model application scope is expanded) | Knowledge accumulation (unknown task) |

After the knowledge base update module 225 updates the known knowledge, data stored in the knowledge base module 210 may be continuously accumulated and/or updated, so that the task learning system 200 can process more and/or updated tasks. This improves a machine learning capability of the task learning system.

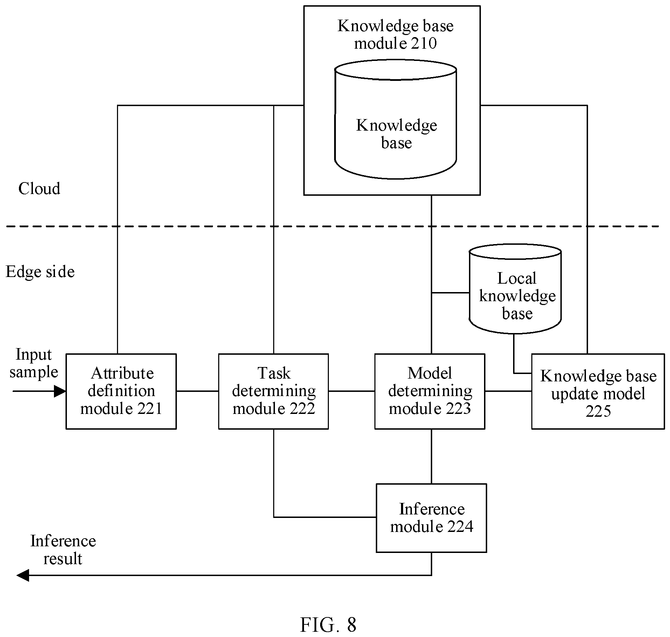

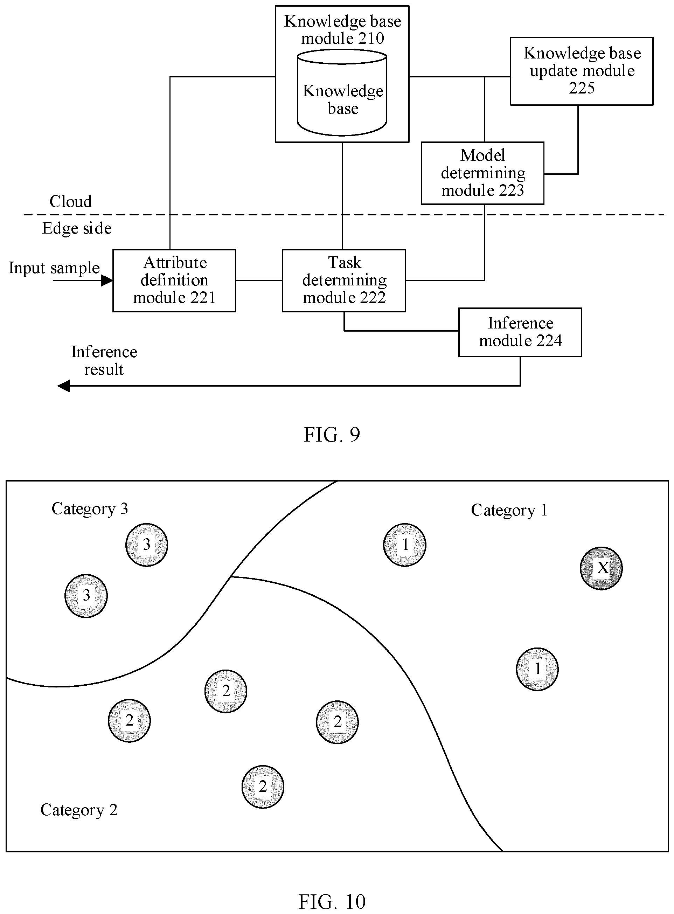

Further, the task learning system 200 in this embodiment may be deployed in the cloud (for example, a cloud center), so that a machine learning service can be provided for the user in a form of a cloud service; or the task learning system 200 may be deployed locally, for example, in a local terminal or a local server; or the task learning system 200 may be deployed through edge-cloud collaboration. For ease of understanding, this embodiment provides two examples of deploying the task learning system 200 through edge-cloud collaboration, as shown in FIG. 8 and FIG. 9 respectively.

In the task learning system 200 shown in FIG. 8, the knowledge base module 210 may be deployed in the cloud, and the knowledge base module 210 may include a knowledge base. The attribute definition module 221, the task determining module 222, the model determining module 223, the inference module 224, and the knowledge base update module 225 in the task learning system 200 may be deployed in the edge side network close to the user.

In this deployment manner, computing processes such as determining a target task attribute, determining an unknown task, generating an inference model, and performing inference on an input sample may all be completed in the edge side network, and the cloud may be used only for knowledge storage. In this way, in a process in which the task learning system 200 completes machine learning on an input sample, original data (for example, an input sample provided by the user and intermediate data generated in a machine learning process) may not need to be uploaded to the cloud, so that a risk of leakage of user privacy information can be effectively reduced.

The task learning system 200 may further create one or more local knowledge bases (for example, create one local knowledge base in FIG. 8) in the edge side network. The local knowledge base may be used to store some knowledge, for example, store information of some tasks (for example, common tasks of the user) such as a task attribute, a task model, a training sample of the task model, a task relationship, and a task group. When the task learning system 200 does not find, in the local knowledge base, information such as a task attribute or a task model that matches an inference task corresponding to the input sample, the task learning system may further determine, based on data stored in the knowledge base module 210 in the cloud, whether the inference task is an unknown task. When determining, based on the data in the local knowledge base, that the inference task is a known task, the task learning system 200 may directly perform inference on the known task by using a task model stored in the local knowledge base.

However, in the task learning system 200 shown in FIG. 9, some computing with heavy load may be migrated to the cloud, so that inference accuracy of the input sample can be improved by using a data processing capability of the cloud in the edge side network with limited resources. Specifically, as shown in FIG. 9, the knowledge base module 210, the model determining module 223, and the knowledge base update module 225 may be located in the cloud, and the attribute definition module 221, the task determining module 222, and the inference module 224 may be located in the edge side network. In this way, by using a computing capability of the cloud, high inference accuracy can be achieved, resource consumption in the edge side network can also be reduced, and a computing capability requirement in the edge side network can be reduced.

Certainly, edge-cloud collaborative deployment of the task learning system 200 shown in FIG. 8 and FIG. 9 is merely an example. During actual application, the task learning system 200 may alternatively be deployed in a manner other than the manner in the foregoing example.

For example, the knowledge base module 210 may be deployed in the cloud, as shown in FIG. 8 and FIG. 9. In this way, based on a cloud resource, the knowledge base module 210 may provide large-scale data such as models, samples, and other information, so that the task learning system 200 can more easily identify the inference task corresponding to the input sample as a known task. This can improve inference efficiency of the input sample, and improve inference accuracy of the input sample. In addition, even if the inference task corresponding to the input sample belongs to an unknown task, the knowledge base module 210 in the cloud may also provide data such as more similar task models. Therefore, there is a high probability that the task learning system 200 can improve an inference effect of the unknown task based on the data.

Certainly, the knowledge base module 210 may alternatively be deployed in the edge side network, so that the attribute definition module 221, the task determining module 222, and the model determining module 223 that depend on knowledge stored in the knowledge base module 210 can quickly obtain and process data. This can accelerate an inference process for the input sample. In addition, original data such as the input sample provided by the user may be stored in the edge side net work, and user data privacy can also be effectively protected.

However, in another implementation, the knowledge base module 210 may alternatively be deployed in a distributed manner, that is, a knowledge base with a large data scale may be deployed in the cloud, and a plurality of local knowledge bases with a small data scale are deployed in the edge side network (for example, different local knowledge bases may be deployed in different regions). In this way, by using a knowledge base with a large data scale deployed in the cloud, the task learning system 200 can more easily identify the inference task corresponding to the input sample as a known task, and can also generate an inference model based on data such as more similar task models for an unknown task. This can improve an inference effect of the input sample. In addition, original data and computing data that are obtained by each edge node may not need to be uploaded to the cloud knowledge base, but may be directly stored in the local knowledge base. This can effectively protect user data privacy.

The model determining module 223 may be deployed in the cloud, as shown in FIG. 9, so that cloud computing resources can be fully used. Particularly, when the model determining module 223 retrains a model for an unknown task by combining known models, a large quantity of storage resources and computing resources that are required by the model determining module may be borne by the cloud, so that efficiency of generating the inference model by the model determining module 223 is improved.

Certainly, the model determining module 223 may alternatively be deployed in the edge side network, as shown in FIG. 8, and may determine, by using computing and storage resources of the edge side network, the inference model for performing inference on the input sample. In this way, related data involved in a calculation process of the model determining module 223 may not be uploaded to the cloud, so that user data privacy can be protected.

In another implementation, the model determining module 223 may alternatively be deployed in a distributed manner. To be specific, the model determining module 223 may obtain a known task model and a corresponding training sample from different edge nodes in the edge side network, so that more known task models and sample data can be used to generate a corresponding inference model for the inference task corresponding to the input sample. In this way, it may be easier for the model determining module 223 to obtain a known task model that is more similar to (or even matches) the inference model, and inference accuracy of the input sample is improved. In addition, data involved in a process in which the model determining module 223 generates the inference model may not need to be uploaded to the cloud, so that user privacy data security can be improved.

The knowledge base update module 225 may be deployed in the cloud, as shown in FIG. 9. In this way, the knowledge base update module 225 may update, in the cloud by using more data such as training samples and task models and more computing resources, the knowledge stored in the knowledge base module 210, so as to achieve a better update effect.

Certainly, the knowledge base update module 225 may alternatively be deployed in the edge side network, as shown in FIG. 8. In this way, both the input sample and intermediate data involved in a process of performing inference on the input sample may be located in the edge side network, so that user data privacy can be effectively protected.

However, in another implementation, the knowledge base update module 225 may alternatively be deployed in a distributed manner. Specifically, a function of updating knowledge of an unknown task may be deployed in the edge side network, and a function of updating, by using the knowledge of the unknown task, affected known knowledge stored in the knowledge base module 210 is deployed in the cloud. This can effectively protect user data privacy security. In addition, an update function of the cloud may be connected to update results of a plurality of edge side networks, and the update results of the plurality of edge side network are used to update, in the cloud, data stored in the knowledge base module 210. This can improve an update effect of a known task stored in the knowledge base module 210 (a knowledge update range is wider, and accuracy is higher).

In the foregoing example, a manner of deploying the knowledge base module 210, the model determining module 223, and the knowledge base update module 225 is described as an example. The attribute definition module 221, the task determining module 222, and the inference module 224 in the task learning system may also be deployed in the cloud and the edge side network as the foregoing modules, or may be deployed in a distributed manner. Optionally, the attribute definition module 221, the task determining module 222, and the inference module 224 may all be deployed in the edge side network. The foregoing example is merely used to describe deployment implementation of the task learning system 200 as an example. During actual application, a more complex or simplified deployment manner or the like may be used. This is not limited in this embodiment.

For ease of understanding, the following describes a technical solution of an embodiment of this application in detail with reference to a specific application scenario.

In operating costs of a chiller system, energy consumption costs of the chiller system account for a large proportion. Therefore, in a running process of the chiller system, energy consumption of the chiller system usually expects to be reduced through machine learning. For example, minimum energy consumption of the chiller system in different time periods when an application requirement is met may be predicted by using a corresponding machine learning model, so that energy consumption control can be performed in a corresponding time period based on the predicted energy consumption. This can avoid a case in which an unnecessary resource waste is caused and costs of the chiller system are increased because of excessively high energy consumption (exceeding the application requirement) of the chiller system, and can also avoid a case in which the chiller cannot meet the application requirement due to low energy consumption control.

For example, the task attribute that may be stored in the knowledge base module 210 includes a task attribute category "season" and an attribute value "winter", and the stored task model is a task model for predicting energy consumption of the chiller in a user working time (for example, 9:00 to 12:30 and 14:00 to 18:00) in winter. For example, the knowledge base module 210 temporarily stores only running energy consumption data (as a sample) of the chiller in the user working time in winter and the task model for predicting energy consumption.

During actual application, the user may expect that the task learning system 200 can predict the energy consumption of the chiller in the user working time in winter (in this case, an input sample provided by the user is the user working time in winter), and may also expect that the task learning system 200 can predict energy consumption of the chiller in a user lunch break (for example, 12:30 to 14:00) in winter (in this case, an input sample provided by the user is the user lunch break in winter), energy consumption in a user working time in summer (in this case, an input sample provided by the user is a user working time in summer), energy consumption in a user lunch break in summer (in this case, an input sample provided by the user is the user lunch break in summer), or the like.

In this case, the attribute definition module 221 may determine a target task attribute of the input sample based on the input sample provided by the user. The target task attribute may be specifically determined based on a season and a time period to which the input sample belongs. For example, when the input sample is a data item "please predict energy consumption of a chiller in a lunch break in winter", the attribute definition module 221 may determine that the target task attribute of the input sample is "winter". For specific implementation, refer to the related descriptions in the foregoing embodiment. Details are not described herein.

After the target task attribute of the input sample is determined, the task determining module 222 may determine whether an inference task corresponding to the input sample is a known task. For example, the task determining module 222 may determine, from two dimensions: a task attribute and a task model, whether the inference task corresponding to the input sample is a known task.

Specifically, the task determining module 222 may calculate a domain-match degree (domain-match degree, DMD) between the target task attribute and a task attribute stored in the knowledge base module 210, to indicate a degree of matching between the two task attributes. In addition, the task determining module 222 may further calculate a model-match degree (model-match degree, MMD) between an inference model of the input sample and a known task model stored in the knowledge base module 210, to indicate a degree of matching between the two task models.

Ranges of DMD and MMD values may be set within an interval [0, 1], and the DMD and MMD values are discrete (for example, are only 0 or 1), or may be continuous (that is, any values in the interval [0, 1]).

When the DMD value is discrete, the task determining module 222 may calculate a minimum editing distance between an attribute value of the target task attribute and an attribute value of the task attribute stored in the knowledge base module 210, and determine, based on the minimum editing distance, whether the target task attribute matches a task attribute corresponding to each task in the knowledge base. Details are shown in Table 3.

**Table 3**

| Task attribute stored in the knowledge base module 210 | Data identifier | Task attribute (season) | | |
|---|---|---|---|---|
| | 1 | Winter | | |
| Target task attribute | Data identifier | Task attribute (season) | Minimum editing distance | DMD |
| | 1 | Summer | 0 | 1 |
| | 2 | Summer | 0 | 1 |
| | 3 | Winter | 1 | 0 |
| | 4 | Winter | 1 | 0 |

In an example, the task determining module 222 may measure the DMD by using (minimum editing distance). In this case, when the user separately provides four different input samples (target task attributes corresponding to the four input samples are respectively "summer", "summer", "winter", and "winter"), DMDs respectively corresponding to the four input samples are shown in Table 3 (are sequentially " 1", " 1", "0", and "0").

When DMD values are continuous, the task determining module 222 may determine the DMD values by using a pre-trained unsupervised model (for example, an unsupervised classifier), and the unsupervised model may output a DMD between the target task attribute and the known task attribute.

A principle of outputting the DMD by the unsupervised model based on the target task attribute may be shown in FIG. 10. A block in FIG. 10 may represent the knowledge base in the knowledge base module 210, "1", "2", and "3" in FIG. 10 are task attributes stored in the knowledge base module 210, a same value indicates that task attributes are aggregated into one category (each category is segmented by using a curve in FIG. 10), and "X" represents the target task attribute. In this case, the unsupervised model may calculate a similarity between the target task attribute and each cluster center. It is assumed that a similarity between the target task attribute "X" and the cluster center of Category 1 is 0.7, a similarity between the target task attribute "X" and the cluster center of Category 2 is 0.2, and a similarity between the target task attribute "X" and the cluster center of Category 3 is 0.1. In this case, the task determining module 222 may determine DMD = max {0.7, 0.2, 0.1 } = 0.7.

Certainly, the DMD value may alternatively be calculated by using a supervised model. A specific implementation is similar to the specific implementation of calculating the DMD value by using the unsupervised model. For understanding, refer to the foregoing descriptions. Details are not described herein again.

In this embodiment, when the DMD value is greater than a preset similarity threshold, the task determining module 222 may determine that the target task attribute matches the known task attribute stored in the knowledge base module 210. However, when the DMD value is less than or equal to the preset similarity threshold, the task determining module 222 may determine that the target task attribute does not match the known task attribute stored in the knowledge base module 210. For example, it is assumed that the preset similarity threshold is 0.5. Because DMD = 0.7 > 0.5, the task determining module 222 may determine that the target task attribute matches the known task attribute stored in the knowledge base module 210.

When calculating the MMD, the task determining module 222 may construct a confidence model for each known task model in advance (certainly, a plurality of known task models may alternatively share one confidence model, and the like). An input of the confidence model is a test sample, and an output is a prediction error rate of performing inference on the test sample by using the known task model. The prediction error rate may be, for example, marked by a skilled person. In this way, the task determining module 222 may input the input sample into the confidence model corresponding to each known task model, and obtain the prediction error rate that is output by the confidence model, to determine the MMD based on the prediction error rate that is output by each confidence model.

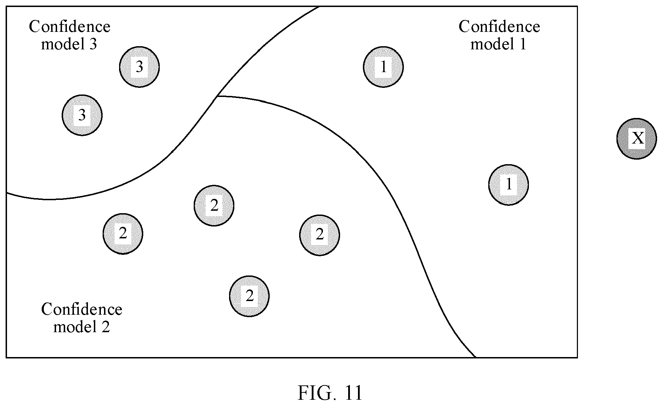

For example, as shown in FIG. 11, a plurality of task models stored in the knowledge base module 210 may be divided into three groups, and a plurality of task models in each group may share one confidence model. The task determining module 222 may input the input sample (that is, "X" in FIG. 11) into a confidence model 1, a confidence model 2, and a confidence model 3 that are stored in the knowledge base module 210, and each confidence model outputs a prediction error rate. Assuming that ratios are respectively 0.8 (confidence model 1), 0.7 (confidence model 2), and 0.3 (confidence model 3), the task determining module 222 may calculate an average value of the prediction error rates that are output by all the confidence models, and use the average value as the MMD, that is, MMD = (0.8 + 0.7 + 0.3)/3 = 0.6.

In this embodiment, when the MMD value is greater than a preset error rate threshold, the task determining module 222 may determine that the inference model of the input sample does not match the known task model stored in the knowledge base module 210. However, when the DMD value is less than or equal to the preset error rate threshold, the task determining module 222 may determine that the inference model of the input sample matches the known task model stored in the knowledge base module 210, that is, the known task model may be used as the inference model to perform inference on the input sample. For example, it is assumed that the preset error threshold is 0.5. Because MMD = 0.6 > 0.5, the task determining module 222 may determine that the inference model of the input sample does not match the known task model stored in the knowledge base module 210.

Based on the DMD and the MMD, the task determining module 222 may determine, based on the input sample, whether the target task attribute matches the known task attribute stored in the knowledge base module 210, and determine whether the inference model of the input sample matches the known task model stored in the knowledge base module 210. It is assumed that four energy consumption prediction tasks of a chiller are currently stored: an energy consumption prediction task in a winter working time, an energy consumption prediction task in a winter lunch break, an energy consumption prediction task in a summer working time, and an energy consumption prediction task in a summer lunch break. In this case, for four input samples (corresponding to the four energy consumption prediction tasks), the task determining module 222 may obtain corresponding task attribute matching results and task model matching results (the knowledge currently stored in the knowledge base module 210 is a task model for predicting energy consumption generated by the chiller in the winter working time), as shown in Table 4.

Table 4

|  | Task model matched | Task model mismatched |
|---|---|---|
| Task attribute matched | Winter working time | Winter lunch break |
| Task attribute mismatched | Summer working time | Summer lunch break |

Because a personnel campus entering/leaving change in the lunch break is large, cooling capacity load of the chiller is greatly affected. Therefore, the energy consumption of the chiller in the lunch break cannot be predicted by using an existing working time prediction model.

For example, the task determining module 222 may determine, based on the result of matching between the task attribute and the task model shown in Table 4, that the energy consumption prediction task in the winter working time is a known task, and may perform prediction by using an existing task model in the knowledge base. The task determining module 222 may determine that the remaining three energy consumption prediction tasks are unknown tasks.

Then, for the known task, the task determining module 222 selects a corresponding known model from the knowledge base module 210, and sends the known model to the inference module 224; and then the inference module 224 performs, by using the known model, inference on the input sample that belongs to "winter working time". For each of the unknown tasks, the task determining module 222 may send the unknown task to the model determining module 223, so that the model determining module 223 determines a corresponding inference model for the unknown task.

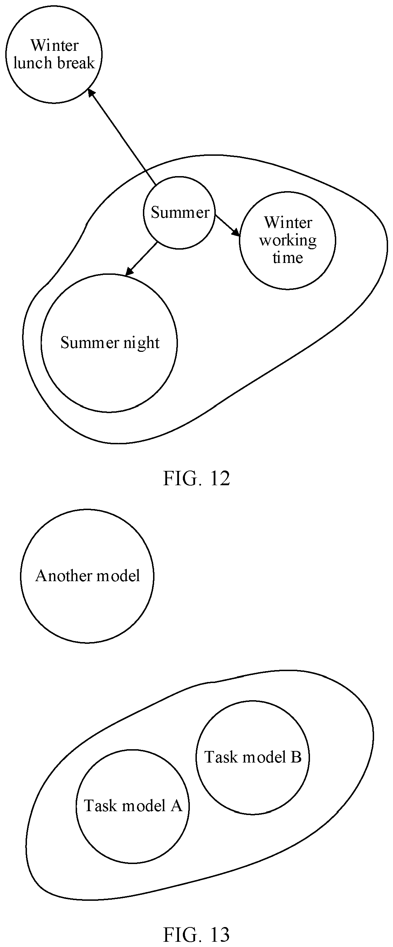

In an example, the model determining module 223 may combine training samples that correspond to different known models and that are stored in the knowledge base module 210, obtain a new task model through retraining by using the combined training samples, and use the new task model as an inference model for the (single) unknown task. For example, as shown in FIG. 12, when the model determining module 223 generates an inference model for the energy consumption prediction task in the summer working time, it can be learned through sample feature calculation that energy consumption data of the chiller working at summer night and energy consumption data of the chiller in the winter working time are both similar to an energy consumption result predicted by the energy consumption inference model. In this case, the model determining module 223 may use, as a center, the energy consumption data (an input sample) in the summer working time that is provided by the user, to find the data at summer night and the data in the winter working time that are most similar to the energy consumption data in the summer working time, so that a new inference model can be obtained through retraining based on the found known sample from energy consumption data (known samples) stored in the knowledge base module 210. When the known sample is structured data, the model determining module 223 may perform model training based on the found known sample, to obtain the new inference model. When the known sample is unstructured data, if model training is performed, a large quantity of computing resources may need to be consumed. Therefore, the model determining module 223 may retrain the known model based on the known model in the knowledge base module 210 by using the found known sample, and use, as the inference model, a known model obtained through retraining, so as to reduce a calculation amount required by the model determining module 223 to generate the task model. Then, the inference module 224 may perform, by using the new inference model, inference on the input sample provided by the user.

For example, the inference model may be determined by using Formula (1):

$$f_{new} = \sum w_i f_i, \quad w_i \begin{cases} 0, s_i < 0.3 \\ s_i \end{cases} \quad (1)$$

Herein, $f_{new}$ is the inference model obtained through combination, $f_i$ is a model of the ith attribute, $w_i$ is a weight value of the model of the ith attribute, and $w_i$ is a migration rate of the task model.

However, in another example, the model determining module 223 may alternatively combine known models, to perform inference on the (single) unknown task by using the plurality of combined known models. For example, as shown in FIG. 13, when generating an inference model for the energy consumption prediction task in the summer working time, the model determining module 223 may find, based on a target task attribute and a model migration rate, a known model A for predicting energy consumption of the chiller at summer night and a known model B for predicting energy consumption of the chiller in the winter working time from known models stored in the knowledge base module 210. The known model is more suitable for inference on the input sample than another task model stored in the knowledge base module 210 (that is, may have higher inference accuracy). Therefore, the model determining module 223 may combine a task model A and a task model B, and determine the combination as an inference model corresponding to the unknown task.

Correspondingly, when performing inference on the input sample based on the inference model, the inference module 224 may calculate an average value of inference results that are output by the task model A and the task model B, to use the calculated average value as a final inference result of the input sample. Certainly, during actual application, a specific implementation in which the inference module 224 obtains the inference result of the input sample based on the plurality of models is not limited to this example.

Finally, the knowledge base update module 225 may further update knowledge (data such as a task attribute and a task model) stored in the knowledge base module 210. In this case, the knowledge base update module 225 may not need to perform re-learning based on all known knowledge and knowledge related to a newly added unknown task, but may update only a part of known knowledge affected by knowledge related to the unknown task. Specifically, update manners such as knowledge inheritance, knowledge accumulation, knowledge merging, and knowledge remodeling may be included. For example, on the basis of Table 4, a knowledge update manner of the knowledge base update module 225 may be shown in Table 5.

**Table 5**

|  | Task model matched | Task model mismatched |
|---|---|---|
| Task attribute matched | Winter working time-known task-knowledge inheritance | Winter lunch break-unknown task-knowledge remodeling/knowledge accumulation |
| Task attribute mismatched | Summer working time-unknown task-knowledge merging | Summer lunch break-unknown task-knowledge accumulation |

In this embodiment, although the knowledge base module 210 does not store an energy consumption prediction model for the chiller in the winter lunch break, an energy consumption prediction model for the chiller in the summer working time, and an energy consumption prediction model for the chiller in the summer lunch break, the task learning system may automatically divide energy consumption prediction tasks, generate a new inference model based on known sample data (and known models) stored in the knowledge base module 210, and complete energy consumption prediction for a corresponding task by using the new inference model. This can effectively improve an inference effect of an unknown task, that is, improve energy consumption prediction accuracy.

In the foregoing embodiment, the technical solution of this embodiment is described by using an example of predicting energy consumption of a chiller. The technical solution of this embodiment may also be applied to a safety helmet detection scenario.

A safety helmet detection system is usually a popular and universal artificial intelligence auxiliary system, and a construction site expects to identify, through deep learning, whether a person in a surveillance camera is wearing a safety helmet, so as to ensure operation safety of a construction engineer as much as possible. The task learning system 200 in this embodiment may be embedded in the safety helmet detection system, or the task learning system 200 is used as the safety helmet detection system, or the like.

During actual application, surveillance cameras are usually deployed at specific locations based on the construction progress, for example, an entrance and an exit of the construction site and an explicit passage of the construction site. However, as the construction progress changes, more surveillance cameras need to be deployed or a shooting angle of an existing surveillance camera needs to be adjusted. Therefore, for a surveillance image of a newly added location, a surveillance image obtained after a shooting angle is adjusted, and the like, the safety helmet detection system is still required to accurately identify whether a person in the surveillance image wears a safety helmet.

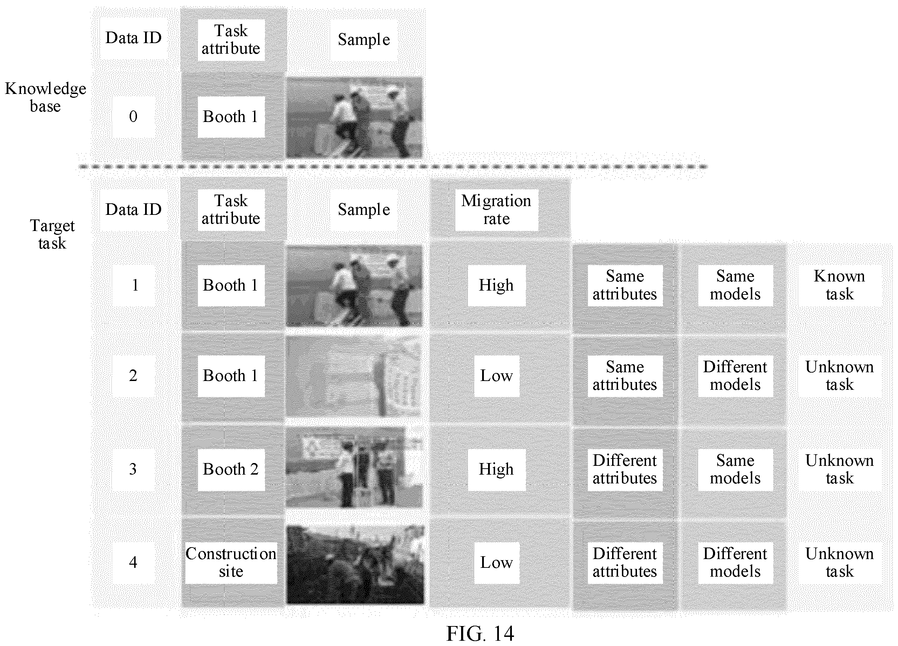

However, in different shooting scenarios, an attribute of a safety helmet identification task of the safety helmet detection system may change, and consequently accuracy of identifying a safety helmet by a known task model may be affected. In addition, even in a same shooting scenario, accuracy of identifying a safety helmet may be affected due to other factors (such as shooting light brightness and a shooting angle). For example, it is assumed that a known task model may implement safety helmet identification on a surveillance image (as shown in FIG. 14) shot by a surveillance camera 1 at a booth 1. In this case, shooting brightness of the surveillance camera 1 is normal brightness. Therefore, known knowledge stored in the knowledge base module 210 includes a known task attribute "booth 1" and the known model.

When the surveillance camera 1 performs "highlight" processing (that is, improves brightness of a shot image) during shooting, different models need to be used to perform safety helmet identification on the surveillance image on which "highlight" processing is performed, so as to ensure identification accuracy. In this case, a safety helmet identification task of the surveillance video on which "highlight" processing is performed is an unknown task with a same task attribute but different task models.

If a new surveillance camera 2 is deployed at a new location (booth 2), and normal brightness is also used for shooting, because a shooting angle, shooting brightness, and the like of the surveillance camera 2 are similar to those of the surveillance camera 1, a known task model may be used to perform a safety helmet identification task in a surveillance video shot at the booth 2, that is, an unknown task with different task attributes but a same task model. Correspondingly, migration of the task model is high.

However, when a new surveillance camera 3 is deployed at the construction site and normal brightness is used for shooting, because shooting locations and shooting scenarios are greatly different, a safety helmet task of a surveillance video shot by the surveillance camera 3 belongs to an unknown task with different task attributes and task models.

In a specific identification process of the safety helmet detection system, for an input sample (for example, a shot video or a shot image), the attribute definition module 221 may determine a target task attribute of the input sample. For example, the attribute definition module 221 may determine, based on the locations at which the surveillance cameras are deployed, that the target task attribute is the booth 1, the booth 2, and the construction site. For a specific implementation process of determining the target task attribute, refer to the related descriptions of determining the target task attribute in the foregoing embodiment. Details are not described herein again.

Then, the task determining module 222 may perform unknown task determining on an inference task corresponding to the input sample. For example, the task determining module 222 may determine, from two dimensions: a task attribute and a task model, whether the inference task corresponding to the input sample is an unknown task. For the task attribute dimension, the DMD value may be calculated. The DMD is specifically a probability that the target task attribute is divided into known task attributes such as the booth 1, the booth 2, and the construction site, or may be a cosine similarity between a vector feature of the target task attribute and a vector feature of each known task attribute. For the task model dimension, the MMD value may be calculated. For example, the MMD may be calculated by using a confidence model corresponding to a known task model. For details, refer to the foregoing related descriptions. Details are not described herein again.

In this way, based on the two dimensions: a task attribute and a task model, a result of matching between each of task attributes and each of task models of the safety helmet identification task in normal brightness at the booth 1, the safety helmet identification task in high brightness at the booth 1, the safety helmet identification task in normal brightness at the booth 2, and the safety helmet identification task in normal brightness at the construction site, and a corresponding unknown task determining result may be determined, as shown in Table 6.

**Table 5**

| | Task model matched | Task model mismatched |
|---|---|---|
| Task attribute matched | Normal brightness at the booth 1: known task | High brightness at the booth 1: unknown task |
| Task attribute mismatched | Normal brightness at the booth 2: unknown task | Normal brightness at the construction site: unknown task |

For the known task determined by the task determining module 222, the inference module 224 may perform safety helmet identification on the input sample by using the known model corresponding to the booth 1. For the unknown task determined by the task determining module 222, the model determining module 223 may generate a corresponding inference model for each unknown task. Specifically, the inference model may be generated by reusing a known task model, or by retraining a known task model, or by obtaining a new task model through training by using a training sample of a known model. For details, refer to the related descriptions in the foregoing embodiment. Details are not described herein. For the inference model generated by the model determining module 223, the inference module 224 may perform inference on an input sample of a corresponding unknown task by using the inference model, to obtain an inference result required by the user

Further, when shooting data of the surveillance camera is accumulated to meet a specific condition, the knowledge base update module 225 may be triggered to update the known task model and the known task attribute that are stored in the knowledge base module 210. Specifically, the known knowledge stored in the knowledge base module 210 may be updated in the foregoing update manners such as knowledge inheritance, knowledge accumulation, knowledge merging, and knowledge remodeling.

In this embodiment, although the knowledge base module 210 does not store a model for detecting a safety helmet in the surveillance image in high brightness at the booth 1, a model for detecting a safety helmet in the surveillance image in normal brightness at the booth 2, and a model for detecting a safety helmet in the surveillance image in normal brightness at the construction site, the task learning system may automatically divide detection tasks, generate a new inference model based on known sample data (and known models) stored in the knowledge base module 210, and complete safety helmet detection for a corresponding task by using the new inference model. This can effectively improve an inference effect of an unknown task, that is, improve safety helmet detection accuracy.

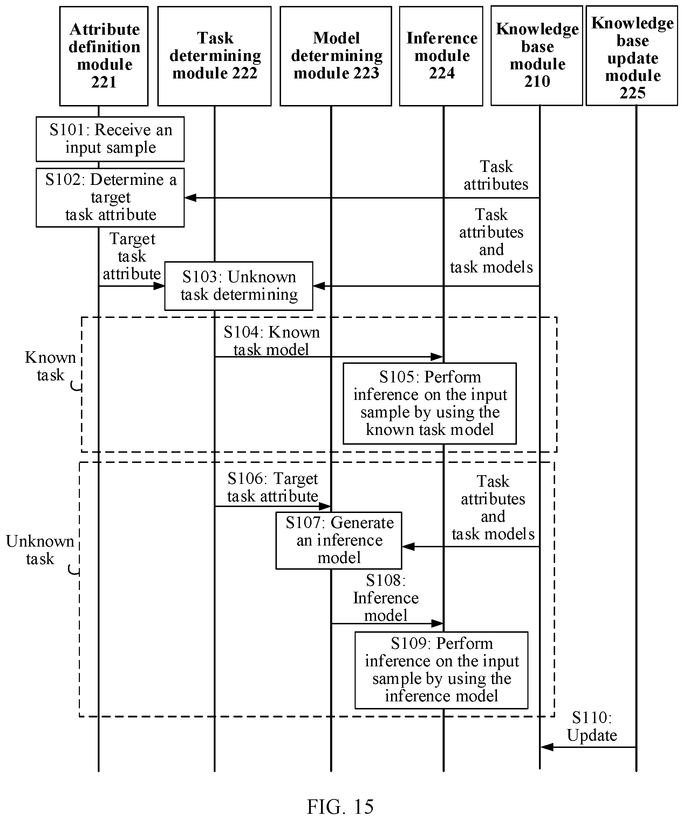

With reference to FIG. 1 to FIG. 14, the foregoing describes, from the perspective of a system, a process in which the task learning system 200 performs inference on the input sample provided by the user. With reference to FIG. 15, the following describes, from the perspective of a method procedure, a specific implementation process in which the task learning system 200 performs inference on the input sample.

As shown in FIG. 15, a task learning method performed by the task learning system 200 may specifically include the following steps.

S101: An attribute definition module 221 receives an input sample provided by a user.

S102: The attribute definition module 221 determines a target task attribute of the input sample based on the input sample and task attributes stored in a knowledge base module 210.

S103: A task determining module 222 determines, based on the target task attribute determined by the attribute definition module 221, and the task attributes and task models that are stored in the knowledge base module, whether an inference task corresponding to the input sample is an unknown task.

In an example, the task determining module 222 may determine a known task, an unknown task, or the like based on a difference between the target task attribute and the task attribute stored in the knowledge base module 210.

The difference between the task attributes may be, for example, a minimum editing distance between attribute values. Alternatively, a degree of the difference between the task attributes is measured by using other information.

In another example, the task determining module 222 may select, based on the target task attribute, a task model associated with the target task attribute from the task models stored in the knowledge base module 210, and determine, based on any one or more of confidence of performing inference on the input sample by using the selected task model, a model migration rate, and task model quality, whether the inference task corresponding to the input sample is an unknown task.

S104: When determining that the inference task corresponding to the input sample is a known task, the task determining module 222 may send a known task model to an inference module 224.

S105: The inference module 224 performs inference on the received input sample by using the received known task model, and feeds back an inference result.

S106: When determining that the inference task corresponding to the input sample is an unknown task, the task determining module 222 sends the target task attribute to a model determining module 223.

S107: The model determining module 223 generates a new inference model for the unknown task based on the received target task attribute, and the task attributes and the task models that are stored in the knowledge base module 210.

In an example, the model determining module 223 may determine, based on the target task attribute, a plurality of candidate task models in the task models stored in the knowledge base module 210, and use the plurality of candidate models as the inference model (in this case, the inference model is formed by combining the plurality of known task models).

In another example, the model determining module 223 may determine, based on the target task attribute, a plurality of candidate task models in the task models stored in the knowledge base module 210, and further determine training samples respectively corresponding to the plurality of candidate task models stored in the knowledge base module 210, so that the model determining module 223 can retrain one or more candidate models based on the determined training samples, and use, as the inference model, candidate task models obtained through retraining. When one candidate task model is retrained by using a training sample, the inference model includes one model. When a plurality of candidate task models are retrained by using training samples, the inference model includes a plurality of models.

In still another example, the model determining module 223 may determine, based on the target task attribute, training samples respectively corresponding to a plurality of candidate task models in the knowledge base module 210, perform retraining based on the determined training samples, to obtain a new task model, and use the task model as the inference model.

In a further implementation, the model determining module 223 may further generate a new inference model for the unknown task with reference to a task relationship (for example, a subordinate relationship and/or a migration relationship) stored in the knowledge base module 210, the target task attribute, and the task attributes and the task models that are stored in the knowledge base module 210.

S108: The model determining module 223 sends the generated inference model to the inference module 224.

S109: The inference module 224 performs inference on the received input sample by using the inference model sent by the model determining module 223, and feeds back an inference result.

When the inference model includes a plurality of models, the inference module 224 may perform inference on the input sample by using all the models, to obtain inference results that are output by all the models. Then, the inference module 224 may determine a final inference result from the inference results that are output by all the models, for example, through voting or averaging. However, when the inference model includes one model, the inference module 224 may use an output result of the model as a final inference result.

In this embodiment, the input sample received by the inference module 224 may be sent by the task determining module 222. Alternatively, when the inference task corresponding to the input sample is an unknown task, the input sample may be sent by the model determining module 223 to the inference module 224. Certainly, during actual application, the input sample may alternatively be sent by another module (for example, the attribute definition module 221) to the inference module 224. A specific implementation in which the inference module 224 obtains the input sample is not limited in this embodiment.

S110: A knowledge base update module 225 updates knowledge stored in the knowledge base module 210.

In this embodiment, regardless of whether the inference task corresponding to the input sample belongs to a known task or an unknown task, the knowledge base update module 225 may update, by using data involved in a process of performing task learning on the input sample, the known knowledge stored in the knowledge base module 210, where the update includes any one or more of knowledge inheritance, knowledge accumulation, knowledge merging, and knowledge remodeling.

It should be noted that the task learning method described in the method embodiment shown in FIG. 15 corresponds to the task learning system described in the foregoing system embodiment. Therefore, for a specific implementation process of each of step S 101 to step S110 and a technical effect thereof, refer to the related descriptions in the foregoing system embodiment. Details are not described herein again.

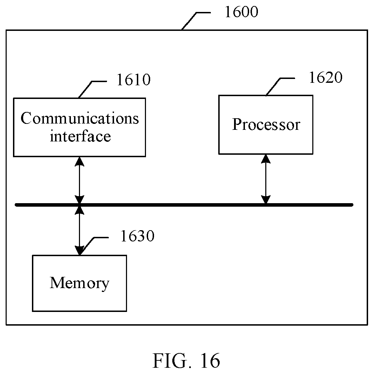

With reference to FIG. 1 to FIG. 15, the foregoing describes in detail the task learning system and the task learning method provided in this application. With reference to FIG. 16, the following describes a device provided in this application.

Based on a same invention concept as the foregoing method, an embodiment of this application further provides a device. The device may also be a device such as a computer cluster that carries the foregoing task learning system 200. The device is configured to implement functions of the task learning system 200 in the embodiment shown in FIG. 2.

FIG. 16 is a schematic diagram of a structure of a device 1600. As shown in FIG. 16, the device 1600 includes a bus 1601, a processor 1602, a communications interface 1603, and a memory 1604. The processor 1602, the memory 1604, and the communications interface 1603 communicate with each other through the bus 1601.

The bus 1601 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used for representation in FIG. 16, but this does not mean that there is only one bus or only one type of buses.

The processor 1602 may be any one or more of processors such as a central processing unit (central processing unit, CPU), a graphics processing unit (graphics processing unit, GPU), a microprocessor (microprocessor, MP), and a digital signal processor (digital signal processor, DSP).

The communications interface 1603 is configured to communicate with the outside. For example, the communications interface 1603 may receive an input sample provided by a user terminal, and send an inference result to the user terminal.

The memory 1604 may include a volatile memory (volatile memory), for example, a random access memory (random access memory, RAM). The memory 1604 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1604 stores executable code, and the processor 1602 executes the executable code to perform the foregoing task learning method.

Specifically, when the embodiment shown in FIG. 2 is implemented, and the modules in the task learning system 200 described in the embodiment in FIG. 2 are implemented by using software, software or program code required for executing functions executed by the knowledge base module 210, the attribute definition module 221, the task determining module 222, the model determining module 223, the inference module 224, and the knowledge base update module 225 in FIG. 2 is stored in the memory 1604.

The communications interface 1603 may receive an input sample sent by a user terminal, and then the communications interface 1603 transmits the input sample to the processor 1602 through the bus 1601. The processor 1602 executes program code that corresponds to each module and that is stored in the memory 1604, for example, the program code corresponding to the task determining module 222, to perform a step of determining whether an inference task corresponding to the input sample is an unknown task or another step.

In embodiments of this application, the processor may be a general-purpose processor, a digital signal processor, an application-specific integrated circuit, a field-programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

Couplings in embodiments of this application are indirect couplings or communication connections between apparatuses, units, or modules, may be electrical, mechanical, or other forms, and are used for information exchange between the apparatuses, the modules, and the modules.

The processor may collaborate with the memory. The memory may be a non-volatile memory, for example, a hard disk drive (hard disk drive, HDD) or a solid state drive (solid state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto.

A specific connection medium between the communications interface, the processor, and the memory is not limited in embodiments of this application. For example, the memory, the processor, and the communications interface may be connected through the bus. The bus may be classified into an address bus, a data bus, a control bus, and the like.

Based on the foregoing embodiments, an embodiment of this application further provides a computer storage medium. The storage medium stores a software program. When the software program is read and executed by one or more processors, the method performed by the task learning system 200 provided in any one or more of the foregoing embodiments may be implemented. The computer storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement functions of the task learning system 200 in the foregoing embodiments. Optionally, the chip further includes a memory, and the memory is configured to store necessary program instructions and data that executed by the processor. The chip may include a chip, or may include a chip and another discrete device.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing specific functions in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements specific functions in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing specific functions in one or more processes in the flowcharts and/or in one or more blocks in the block diagrams.

In this specification, the claims, and the accompanying drawings of this application, terms "first", "second", and the like are intended to distinguish between similar objects, but do not necessarily indicate a specific order or sequence. It should be understood that the terms used in such a way are interchangeable in proper cases, and this is merely a distinguishing manner for describing objects having a same attribute in embodiments of this application.

It is clear that a person skilled in the art can make various modifications and variations to embodiments of this application without departing from the scope of embodiments of this application. Therefore, this application is also intended to cover these modifications and variations of embodiments of this application provided that they fall within the scope of protection defined by the following claims and their equivalent technologies.

**Claims**

1. A task learning system, wherein the system comprises:

   a knowledge base module and a task processing apparatus, wherein
   the knowledge base module is configured to store task attributes and task models corresponding to the task attributes; and
   the task processing apparatus is configured to: obtain an input sample; when an inference task corresponding to the input sample is an unknown task, generate an inference model for the unknown task based on a task attribute and a corresponding task model that are stored in the knowledge base module; and perform inference on the input sample by using the inference model, to obtain a target inference result.

2. The system according to claim 1, wherein the task processing apparatus is further configured to: determine a target task attribute of the input sample based on the input sample and the task attributes of the input sample; and determine, based on the target task attribute, and the task attribute and the corresponding task model that are stored in the knowledge base module that are stored in the knowledge base module, that the inference task corresponding to the input sample is an unknown task.

3. The system according to claim 2, wherein the task processing apparatus is specifically configured to determine, based on a difference between the target task attribute and the task attribute stored in the knowledge base module, that the inference task corresponding to the input sample is an unknown task.

4. The system according to claim 2, wherein the task processing apparatus is specifically configured to determine, based on any one or more of confidence of performing inference on the input sample by using each task model, a model migration rate, and task model quality, that the inference task corresponding to the input sample is an unknown task.

5. The system according to any one of claims 2 to 4, wherein the task processing apparatus is specifically configured to generate the inference model for the unknown task based on the target task attribute, and the task attribute and the corresponding task model that are stored in the knowledge base module that are stored in the knowledge base module.

6. The system according to claim 5, wherein the knowledge base module is further configured to store a task relationship, wherein the task relationship comprises a subordinate relationship and/or a migration relationship; and
   the task processing apparatus is specifically configured to generate the inference model for the unknown task based on the target task attribute, the task attributes and the task models that are stored in the knowledge base module, and the task relationship.

7. The system according to claim 5, wherein the task processing apparatus is specifically configured to: determine a plurality of candidate task models in the task models based on the target task attribute; and use the plurality of candidate task models as the inference model.

8. The system according to claim 5, wherein the knowledge base module is further configured to store training samples corresponding to the task attributes; and
   the task processing apparatus is specifically configured to:

determine, based on the target task attribute, training samples respectively corresponding to a plurality of candidate task models in the task models; and

retrain one or more candidate task models based on the training samples respectively corresponding to the plurality of candidate task models, and use, as the inference model, one or more candidate task models obtained through retraining.

9. The system according to claim 5, wherein the knowledge base module is further configured to store training samples corresponding to the task attributes; and

the task processing apparatus is specifically configured to:

determine, based on the target task attribute, training samples respectively corresponding to a plurality of candidate task models in the task models; and

perform training based on the training samples respectively corresponding to the plurality of candidate task models, to obtain a new task model, and use the new task model as the inference model.

10. The system according to any one of claims 1 to 9, wherein the task processing apparatus comprises a model determining module and an inference module, wherein the model determining module is deployed in a cloud or an edge side network, and the inference module is deployed in the edge side network;

the model determining module is configured to: when the inference task corresponding to the input sample is an unknown task, generate the inference model for the unknown task based on the task attribute and the corresponding task model; and

the inference module is configured to perform inference on the input sample by using the inference model, to obtain the target inference result.

11. The system according to any one of claims 1 to 10, wherein the task processing apparatus further comprises an attribute definition module and a task determining module, wherein the attribute definition module and the task determining module are deployed in the edge side network;

the attribute definition module is configured to determine the target task attribute of the input sample based on the input sample and the task attribute of the input sample stored in the knowledge base module; and

the task determining module is configured to determine, based on the target task attribute, and the task attribute and the corresponding task model that are stored in the knowledge base module that are stored in the knowledge base module, that the inference task corresponding to the input sample is an unknown task.

12. The system according to any one of claims 1 to 11, wherein the knowledge base module is deployed in the cloud.

13. The system according to any one of claims 1 to 12, wherein the task processing apparatus is further configured to update, based on the target task attribute of the input sample and the inference model, a task attribute and a task model that are stored in the knowledge base module.

14. The system according to claim 13, wherein the task processing apparatus is specifically configured to add the target task attribute and the inference model to the knowledge base module, so that the knowledge base module simultaneously stores the existing task attributes, the target task attribute, the task models, and the inference model.

15. The system according to claim 13, wherein the task processing apparatus is specifically configured to: replace a corresponding task attribute in the knowledge base module with the target task attribute; and replace a corresponding task model in the knowledge base module with the inference model.

16. The system according to claim 14 or 15, wherein the task processing apparatus comprises a knowledge base update module, wherein the knowledge base update module is deployed in the cloud or the edge side network; and

the knowledge base update module is configured to update, based on the target task attribute of the input sample and the inference model, the task attribute and the task model that are stored in the knowledge base module.

17. The system according to any one of claims 1 to 16, wherein when the inference model comprises a plurality of models, the task processing apparatus is specifically configured to:

perform inference on the input sample by using all the models, to obtain inference results that are output by all the models; and
determine the target inference result in the inference results that are output by all the models.

18. A task learning method, wherein the method comprises:

obtaining an input sample;
when an inference task corresponding to the input sample is an unknown task, generating an inference model for the unknown task based on task attributes and task models corresponding to the task attributes in a knowledge base; and
performing inference on the input sample by using the inference model, to obtain a target inference result.

19. The method according to claim 18, wherein the method further comprises:

determining a target task attribute of the input sample based on the input sample and the task attribute of the input sample; and
determining, based on the target task attribute, and the task attributes and the task models in the knowledge base, that the inference task corresponding to the input sample is an unknown task.

20. The method according to claim 19, wherein the determining, based on the target task attribute, and the task attributes and the task models in the knowledge base, that the inference task corresponding to the input sample is an unknown task comprises:
determining, based on a difference between the target task attribute and the task attribute in the knowledge base, that the inference task corresponding to the input sample is an unknown task.

21. The method according to claim 19, wherein the determining, based on the target task attribute, and the task attributes and the task models in the knowledge base, that the inference task corresponding to the input sample is an unknown task comprises:
determining, based on any one or more of confidence of performing inference on the input sample by using each task model, a model migration rate, and task model quality, that the inference task corresponding to the input sample is an unknown task.

22. The method according to any one of claims 19 to 21, wherein the generating an inference model for the unknown task based on task attributes and task models corresponding to the task attributes in a knowledge base comprises:
generating the inference model for the unknown task based on the target task attribute, and the task attributes and the task models in the knowledge base.

23. The method according to claim 22, wherein the knowledge base further stores a task relationship, wherein the task relationship comprises a subordinate relationship and/or a migration relationship; and
the generating an inference model for the unknown task based on task attributes and task models corresponding to the task attributes in a knowledge base comprises:
generating the inference model for the unknown task based on the target task attribute, the task attributes and the task models in the knowledge base, and the task relationship.

24. The method according to claim 22, wherein the generating an inference model for the unknown task based on task attributes and task models corresponding to the task attributes in a knowledge base comprises:
determining a plurality of candidate task models in the task models based on the target task attribute; and using the plurality of candidate task models as the inference model.

25. The method according to claim 22, wherein the knowledge base further stores training samples corresponding to the task attributes; and
the generating an inference model for the unknown task based on task attributes and task models corresponding to the task attributes in a knowledge base comprises:

determining, based on the target task attribute, training samples respectively corresponding to a plurality of candidate task models in the task models; and
retraining one or more candidate task models based on the training samples respectively corresponding to the plurality of candidate task models, and using, as the inference model, one or more candidate task models obtained through retraining.

26. The method according to claim 22, wherein the knowledge base further stores training samples corresponding to the task attributes; and
the generating an inference model for the unknown task based on task attributes and task models corresponding to the task attributes in a knowledge base comprises:

   determining, based on the target task attribute, training samples respectively corresponding to a plurality of candidate task models in the task models; and
   performing training based on the training samples respectively corresponding to the plurality of candidate task models, to obtain a new task model, and using the new task model as the inference model.

27. The method according to any one of claims 18 to 26, wherein the method further comprises:
updating a task attribute and a task model in the knowledge base based on the target task attribute of the input sample and the inference model.

28. The method according to claim 27, wherein the updating a task attribute and a task model in the knowledge base based on the target task attribute of the input sample and the inference model comprises:
adding the target task attribute and the inference model to the knowledge base, so that the knowledge base simultaneously stores the existing task attributes, the target task attribute, the task models, and the inference model.

29. The method according to claim 27, wherein the updating a task attribute and a task model in the knowledge base based on the target task attribute of the input sample and the inference model comprises:

   replacing a corresponding task attribute in the knowledge base with the target task attribute; and
   replacing a corresponding task model in the knowledge base with the inference model.

30. The method according to any one of claims 18 to 29, wherein when the inference model comprises a plurality of models, the performing inference on the input sample by using the inference model, to obtain a target inference result comprises:

   performing inference on the input sample by using all the models, to obtain inference results that are output by all the models; and
   determining the target inference result in the inference results that are output by all the models.

31. A device, wherein the device comprises a processor and a memory, wherein
the processor is configured to execute instructions stored in the memory, so that the device is enabled to perform the method according to any one of claims 18 to 30.

32. A computer-readable storage medium, comprising instructions, wherein the instructions are used to implement the method according to any one of claims 18 to 30.

33. A computer program product comprising instructions, wherein when the computer program product runs on a computer, the computer is enabled to perform the method according to any one of claims 18 to 30.

Machine learning

Knowledge
base 102

Input sample of a known task

Accurate inference result

Input sample of an unknown task

Inaccurate inference result

User 101

Known task model

FIG. 1

Task learning system 200

Knowledge base
module 210

Knowledge
base

Task processing
apparatus 220

Input
sample

Attribute
definition
module
221

Task
determining
module 222

Model
determining
module 223

Knowledge
base
update
module 225

Inference
module 224

Inference
result

FIG. 2

FIG. 3

FIG. 4

Inference target input interface

Please enter the inference target:
(for example, facial recognition)

Enter a sample

FIG. 5

Root → Beijing, Shenzhen; Shenzhen → Summer in Shenzhen → Winter in Shenzhen

Knowledge accumulation (task attribute) →

Root → Beijing, Shenzhen; Shenzhen → Summer in Shenzhen, Winter in Shenzhen

|  | Beijing | Shenzhen | Summer in Shenzhen |
|---|---|---|---|
| Beijing |  | 0.3 | 0.3 |
| Shenzhen |  |  | 0.8 |
| Summer in Shenzhen |  |  |  |

Knowledge accumulation (task relationship) →

|  | Beijing | Shenzhen | Summer in Shenzhen | Summer in Shenzhen |
|---|---|---|---|---|
| Beijing |  | 0.3 | 0.3 | 0.8 |
| Shenzhen |  |  | 0.8 | 0.3 |
| Summer in Shenzhen |  |  |  | 0.1 |
| Winter in Shenzhen |  |  |  |  |

FIG. 6

EP 4 220 495 A1

FIG. 7

Knowledge base
module 210

Knowledge
base

Cloud

Edge side

Local
knowledge
base

Input
sample

Attribute
definition
module 221

Task
determining
module 222

Model
determining
module 223

Knowledge base
update model
225

Inference
module 224

Inference
result

FIG. 8

Knowledge base
module 210

Knowledge
base

Knowledge base
update module
225

Model
determining
module 223

Cloud

Edge side

Input sample

Attribute
definition
module 221

Task
determining
module 222

Inference
module 224

Inference
result

FIG. 9

Category 3

3

3

Category 1

1

X

1

2

2

2

2

Category 2

FIG. 10

FIG. 11

FIG. 12

FIG. 13

Knowledge
base

| Data ID | Task attribute | Sample |
|---------|---------------|--------|
| 0 | Booth 1 | |

Target
task

| Data ID | Task attribute | Sample | Migration rate | | | |
|---------|---------------|--------|----------------|--|--|--|
| 1 | Booth 1 | | High | Same attributes | Same models | Known task |
| 2 | Booth 1 | | Low | Same attributes | Different models | Unknown task |
| 3 | Booth 2 | | High | Different attributes | Same models | Unknown task |
| 4 | Construction site | | Low | Different attributes | Different models | Unknown task |

FIG. 14

| Attribute definition module 221 | Task determining module 222 | Model determining module 223 | Inference module 224 | Knowledge base module 210 | Knowledge base update module 225 |
|---|---|---|---|---|---|

S101: Receive an input sample

S102: Determine a target task attribute ← Task attributes

Target task attribute →

S103: Unknown task determining ← Task attributes and task models

**Known task**

S104: Known task model →

S105: Perform inference on the input sample by using the known task model

**Unknown task**

S106: Target task attribute →

S107: Generate an inference model ← Task attributes and task models

S108: Inference model →

S109: Perform inference on the input sample by using the inference model

S110: Update ←

FIG. 15

1600

1610

Communications
interface

1620

Processor

1630

Memory

FIG. 16

## INTERNATIONAL SEARCH REPORT

| | International application No. |
|---|---|
| | **PCT/CN2021/127748** |

**A. CLASSIFICATION OF SUBJECT MATTER**

G06N 5/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNKI, CNPAT, WPI, EPODOC, GOOGLE, IEEE: 未知, 待推理, 不明确, 没有匹配, 未匹配, 不确定, 输入样本, 学习, 知识库, 推理, 推断, 任务, 模型, network, match+, model, network, event, learn+

**C. DOCUMENTS CONSIDERED TO BE RELEVANT**

| Category* | Citation of document, with indication, where appropriate, of the relevant passages | Relevant to claim No. |
|---|---|---|
| X | CN 104765733 A (HUAWEI TECHNOLOGIES CO., LTD.) 08 July 2015 (2015-07-08) description, paragraphs [0026]-[0086], and figures 1-5 | 1, 12-16, 18, 27-29, 31-33 |
| A | CN 103203753 A (SAMSUNG ELECTRONICS CO., LTD.) 17 July 2013 (2013-07-17) entire document | 1-33 |
| A | WO 2020121378 A1 (NEC CORPORATION) 18 June 2020 (2020-06-18) entire document | 1-33 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 December 2021** | **26 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | | | International application No. |
|---|---|---|---|
| | | | **PCT/CN2021/127748** |

| Patent document cited in search report | | | Publication date (day/month/year) | Patent family member(s) | | | Publication date (day/month/year) |
|---|---|---|---|---|---|---|---|
| CN | 104765733 | A | 08 July 2015 | None | | | |
| CN | 103203753 | A | 17 July 2013 | KR | 20130083099 | A | 22 July 2013 |
| | | | | US | 2013184867 | A1 | 18 July 2013 |
| WO | 2020121378 | A1 | 18 June 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011210952

- CN 202011417335